# EUROPEAN PATENT SPECIFICATION

(11) **EP 3 964 949 B1**
(45) Date of publication and mention of the grant of the patent: **06.09.2023**
(21) Application number: 19931211.7
(22) Date of filing: 27.05.2019
(51) Int. Cl.: G06F 9/00, G06F 12/1009, G06F 9/455, G06F 12/1036, G06F 12/109

(54) **GRAPHICS PROCESSING METHOD AND APPARATUS**
GRAFIKVERARBEITUNGSVERFAHREN UND -VORRICHTUNG
PROCÉDÉ ET APPAREIL DE TRAITEMENT GRAPHIQUE

(43) Date of publication of application: 09.03.2022
(73) Proprietor: Huawei Technologies Co., Ltd., Shenzhen, Guangdong 518129 (CN)
(72) Inventor: YAO, Gang, Shenzhen, Guangdong 518129 (CN); CHEN, Ping, Shenzhen, Guangdong 518129 (CN); WANG, Ming, Shenzhen, Guangdong 518129 (CN); WU, Gang, Shenzhen, Guangdong 518129 (CN); LUO, Zhiqiang, Shenzhen, Guangdong 518129 (CN)
(74) Representative: Isarpatent
(86) International application number: PCT/CN2019/088565
(87) International publication number: WO 2020/237460

(56) References cited:
- EP-A1- 3 056 990
- EP-A1- 3 185 128
- EP-A1- 3 385 838
- US-A1- 2014 049 551
- US-A1- 2016 259 734
- US-A1- 2018 018 750

## Description

### TECHNICAL FIELD

This disclosure generally relates to the field of chip technologies, and the invention in particular relates to a graphics processing method and apparatus.

### BACKGROUND

A graphics processing unit (GPU) may be used to perform complex mathematical and geometric calculations that are necessary for graphics rendering. Basic working principles of the graphics processing unit are to perform corresponding transformation based on a three-dimensional endpoint model and according to perspective principles, and sample textures corresponding to these endpoints to write a rendering result to a frame buffer. A buffer used by the GPU to sample a texture is usually referred to as a texture buffer. The GPU can sample only a texture buffer in a specific format. Similarly, the GPU can also support only a render target buffer in a specific format. In some scenarios, a data format stored in the buffer is usually not locally supported by the GPU. When the GPU needs to sample this data format, currently, a common method is to explicitly convert a GPU non-native format into a GPU native format and store the GPU native format in an intermediate buffer for sampling by the GPU. Alternatively, when the GPU needs to render the GPU non-native format into this data format, the GPU first render the GPU non-native format into the native format based on a sampling result. Then, data in the native format is explicitly converted into data in the non-native format and is stored in the intermediate buffer. In this method, an additional buffer space needs to be applied for, a memory is consumed, an additional delay is generated, bandwidth is wasted, power consumption is wasted, and costs are high.

EP 3 185 128 A1 relates to a method of GPU virtualization comprising allocating a respective virtual machine (or operating system running on a VM) an identifier by the hypervisor and then this identifier is used to tag every transaction deriving from a GPU workload operating within a given VM context (i.e. every GPU transaction on the system bus which inter-connects the CPU, GPU and other peripherals). Additionally, dedicated portions of a memory resource (which may be GPU registers or RAM) are provided for each VM and whilst each VM can only see their allocated portion of the memory, a microprocessor within the GPU can see all of the memory. Access control is achieved using root memory management units which are configured by the hypervisor and which map guest physical addresses to actual memory addresses based on the identifier associated with the transaction.

EP 3 385 838 A1 dicloses an apparatus and method for efficiently rendering and transmitting to a remote display. A remote display apparatus comprises: a display engine to render a sequence of video images; an encoder to compress the sequence of video images to generate a sequence of compressed video images; a network interface controller to transmit the compressed video images over a network link to a remote display; a plurality of buffer pointer registers to store read pointers and write pointers identifying read locations and write locations, respectively, in a frame buffer and a compressed stream buffer; a central processing unit (CPU) to initialize the read pointers and write pointers for processing one or more of the video images; and the display engine to access a first write pointer to write to a specified location in the frame buffer, the encoder to begin reading from the frame buffer based on a first read pointer value, the encoder to write to the compressed stream buffer based on a second write pointer value, and the network interface controller to read from the compressed stream buffer based on a second read pointer value, the first and second write and read pointer values to be updated without intervention from the CPU as the display engine writes to the frame buffer, the encoder reads from the frame buffer and writes to the compressed stream buffer.

US 2016/0259 734 A1 relates to the management of address translation and caching using a processor that includes at least one CPU configured to run a hypervisor at a first access level and at least one guest operating system at a second access level. The managing includes: at the second access level, translating from virtual addresses to intermediate physical; at the second access level, determining reuse information for ranges of virtual addresses based on estimated reuse of data stored within a virtual address space; at the first access level, translating from the intermediate physical addresses to physical addresses; at the first access level, determining reuse information for ranges of intermediate physical addresses based on estimated reuse of data stored within an intermediate physical address space; and processing reuse information determined at different access levels to store cache lines in selected portions of a first cache.

### SUMMARY

The object of the present invention is to provide a graphics processing method and apparatus, to resolve a problem of high memory consumption and high bandwidth costs when a GPU samples graphics data in a non-native format or needs to render graphics data in a native format into graphics data in a non-native format. This object is solved by the attached independent claims and further embodiments and improvements of the invention are listed in the attached dependent claims. Hereinafter, up to the "brief description of the drawings", expressions like "...aspect according to the invention", "according to the invention", or "the present invention", relate to technical teaching of the broadest embodiment as claimed with the independent claims. Expressions like "implementation", "design", "optionally", "preferably", "scenario", "aspect" or similar relate to further embodiments as claimed, and expressions like "example", "... aspect according to an example", "the disclosure describes", or "the disclosure" describe technical teaching which relates to the understanding of the invention or its embodiments, which, however, is not claimed as such

According to a first aspect according to the invention, a graphics processing method is provided. The method includes: obtaining a first virtual address to be accessed by a graphics processing unit, where the first virtual address belongs to a first virtual address space; and obtaining a second virtual address based on the first virtual address, where the second virtual address belongs to a second virtual address space. The second virtual address space is different from the first virtual address space, the second virtual address space and the first virtual address space are mapped to a same first physical address space, a physical address to which the first virtual address is mapped corresponds to image data in a first format, and a physical address to which the second virtual address is mapped corresponds to image data in a second format.

It may be understood that according to the invention, a second virtual address space is reconstructed, and the second virtual address space is different from the first virtual address space. In this application, an address in the first virtual address space may be mapped to an address in the newly added second virtual address space, and the physical address to which the second virtual address in the newly added second virtual address space is mapped corresponds to the image data in the second format. The image data in the second format is different from the image data in the first format. For example, if the image data in the first format is image data that cannot be directly accessed by the GPU, the image data in the second format is image data that can be accessed by the GPU. In this embodiment of this application, image format conversion is implemented by mapping the address to a newly added virtual address space, and the GPU can access an image in a non-native format without performing format conversion by a format conversion processor. This avoids applying for an additional local GPU buffer space, avoids a plurality of migrations between the format conversion processor and the buffer, reduces memory consumption, avoids a delay, and reduces bandwidth and power consumption.

According to the invention, the obtaining a second virtual address based on the first virtual address specifically includes: translating the first virtual address into an intermediate virtual address, where the intermediate virtual address is a virtual address in the second virtual address space; and mapping the intermediate virtual address to the second virtual address in the second virtual address space. When the first virtual address is a first virtual address in the non-native format, the intermediate virtual address may be understood as an intermediate virtual address in the non-native format, and the second virtual address may be understood as a second virtual address in a native format. In other words, when the second virtual address is obtained, one-time address translation from the first virtual address to the intermediate virtual address and one-time address mapping from the intermediate virtual address to the second virtual address need to be performed. The one-time address mapping from the intermediate virtual address to the second virtual address may be understood as completing pixel-level address mapping in the newly added second virtual address space, so that the GPU can access, based on the second virtual address, the image data corresponding to the physical address, and obtain the image data in the second format such as the native format.

According to the invention, the second virtual address space is added between the existing first virtual address space and the existing first physical address space, and pixel-level address mapping is completed in the newly added second virtual address space. An address of an image in the non-native format is mapped to an address of an image in the native format that can be accessed by the GPU. Further, in this embodiment of this application, one-time address translation from the first virtual address to a first physical address in the conventional technology is split into two times of address translation and one-time pixel-level address mapping: translation from the first virtual address to the intermediate virtual address, pixel-level address mapping from the intermediate virtual address to the second virtual address, and translation from the second virtual address to the first physical address. In this way, the GPU can read or render the image in the non-native format without explicitly performing format conversion. This avoids applying for the additional local GPU buffer space, avoids the plurality of migrations between the format conversion processor and the buffer, reduces the memory consumption, avoids the delay, and reduces the bandwidth and the power consumption.

In a possible not claimed design, the translating the first virtual address into an intermediate virtual address specifically includes: obtaining, based on a first mapping relationship, the intermediate virtual address corresponding to the first virtual address in the second virtual address space, where the first mapping relationship is a mapping relationship between the first virtual address space and the second virtual address space. The first mapping relationship may be stored in a memory management unit (MMU) of the GPU. In this embodiment of this application, the MMU may be integrated into the GPU, or may be located outside the GPU. This is not limited in this application.

In a possible not claimed design, after the obtaining a second virtual address based on the first virtual address, the method further includes: obtaining, based on a second mapping relationship, the first physical address corresponding to the second virtual address in the first physical address space, where the second mapping relationship is a mapping relationship between the second virtual address space and the first physical address space.

It may be understood that, in this application, after the first address translation, the first virtual address is translated into the intermediate virtual address. After the address mapping, the intermediate virtual address is mapped into the second virtual address. After the second address translation, the second virtual address translated into the first physical address. The intermediate virtual address in the non-native format before format mapping and the second virtual address in the native format after format mapping both belong to the consecutive second virtual address space, but an arrangement manner is changed. In the second virtual address space, when the GPU accesses real physical addresses in the non-native format in a sequence of second virtual addresses in the native format, the GPU accesses graphics data in the native format. In other words, the GPU reads or writes the image data in a sequence of the graphics data in the converted native format. Therefore, in this application, in this virtualization manner, no additional format conversion buffer space is required in a sampling process of the GPU, and an actual format conversion process is omitted. In this way, the GPU samples graphics data in the non-native format at low costs. Similarly, when a physical address in the non-native format is obtained based on the second virtual address space when graphics data is really rendered, a sequence of rendering the graphics data based on the physical address in the non-native format is a sequence of rendering graphics data in the native format for the GPU. Therefore, in this application, in this virtualization manner, no additional format conversion buffer space is required in a rendering process of the GPU, and the actual format conversion process is omitted. In this way, the GPU renders the graphics data in the native format to a memory in the non-native format at low costs.

In a possible not claimed design, before the obtaining a second virtual address based on the first virtual address, the method further includes: obtaining a graphics processing request sent to the GPU, where the graphics processing request includes the first virtual address space and the first physical address space; and constructing the second virtual address space based on the first virtual address space and the first physical address space.

In other words, when an application sends the graphics processing request to the GPU, in this embodiment of this application, the graphics processing request may be intercepted by using a virtualization software agent, to construct the second virtual address space based on the request. It should be understood that in this embodiment of this application, the discrete first physical address space and the first virtual address space are first mapped to a consecutive second virtual address space. Then, in the virtualized consecutive space, the graphics data in the non-native format is converted into the graphics data in the native format. Format conversion in this embodiment of this application is implemented by changing an address arrangement manner in the virtual space.

In a possible not claimed design, the method further includes: obtaining the first mapping relationship and the second mapping relationship based on the first virtual address space and the first physical address space.

In a possible not claimed design, the constructing the second virtual address space based on the first virtual address space and the first physical address space specifically includes: obtaining a size of a physical page (PP) corresponding to the first physical address space and a size of a virtual page (VP) corresponding to the first virtual address space; and mapping the first physical address space to a consecutive virtual memory space to obtain the second virtual address space, where a size of a virtual physical page (VPP) corresponding to the second virtual address space is greater than the size of the PP and the size of the VP.

The first mapping relationship between the first virtual address space and the second virtual address space and the second mapping relationship between the second virtual address space and the first physical address space are established only when the second virtual address space constructed in this application covers the first virtual address space and the first physical address space of the real physical address.

According to the invention, the obtaining a second virtual address based on the first virtual address includes:
translating the first virtual address into an intermediate virtual address; determining whether the intermediate virtual address belongs to the second virtual address space; and when the intermediate virtual address belongs to the second virtual address space, mapping the intermediate virtual address to the second virtual address in the second virtual address space. Because the MMU of the GPU maintains a plurality of mapping relationships, a virtual address translated in the MMU may be an actual physical address of another buffer rather than a virtual address in the second virtual address space. Therefore, determining and filtering need to be performed herein. In other words, the intermediate virtual address obtained by the MMU is not necessarily a virtual address in the first mapping relationship.

According to the invention, the mapping the intermediate virtual address to the second virtual address in the second virtual address space specifically includes: obtaining pixel coordinates corresponding to the intermediate virtual address; and obtaining the second virtual address based on the pixel coordinates. Herein is an implementation process of performing pixel-level address mapping. The second virtual address in the native format may be obtained based on the pixel coordinates, so that image data of the real physical address is accessed based on the second virtual address in the native format, and the image data in the native format is obtained.

In a possible design, if the image data in the first format is compressed data that needs to be read by the GPU, the compressed data includes a plurality of compressed graphics blocks. The mapping the intermediate virtual address to the second virtual address in the second virtual address space includes: obtaining pixel coordinates corresponding to the intermediate virtual address; obtaining, based on the pixel coordinates, compression offset information of a target compressed graphics block corresponding to the intermediate virtual address; and obtaining the second virtual address through calculation based on the compression offset information. The method further includes: decompressing the read target compressed graphics block. Herein, when performing pixel-level address conversion is considered, image data in the non-native format stored in the memory may be image data in a compressed format. Correspondingly, when the image data is obtained through sampling, the image data further needs to be decompressed.

In a possible design, if the image data in the first format is compressed data to be written by the GPU, the mapping the intermediate virtual address to the second virtual address in the second virtual address space includes: obtaining pixel coordinates corresponding to the intermediate virtual address; obtaining, based on the pixel coordinates, an address of header data of the to-be-written compressed data; and obtaining the second virtual address based on the address of the header data. In other words, when the data is written, that the compressed data is stored in the memory is considered. Therefore, when the image data in the native format is stored in the memory in the non-native format, the second virtual address of the data in the compressed format needs to be obtained, so that the data is stored in a memory of the physical address based on the second virtual address.

In a possible design, the mapping the intermediate virtual address to the second virtual address in the second virtual address space includes: obtaining pixel coordinates corresponding to the intermediate virtual address; obtaining a signature of a pixel corresponding to the pixel coordinates; and obtaining, based on the signature, the second virtual address corresponding to the signature. If the image data in the first format is encrypted data that needs to be read by the GPU, the method further includes: decrypting the read image data and sending the decrypted image data to the GPU. In this case, that the image data stored in the memory is in an encrypted format needs to be considered. Therefore, when pixel-level address mapping is performed, the second virtual address in the encrypted format needs to be obtained.

According to a second aspect according to the invention, a graphics processing apparatus is provided, where the apparatus includes a graphics processing unit and a hardware virtualization hypervisor.

The GPU is configured to obtain a to-be-accessed first virtual address, where the first virtual address belongs to a first virtual address space. The hardware virtualization hypervisor is configured to obtain a second virtual address based on the first virtual address, where the second virtual address belongs to a second virtual address space. The second virtual address space is different from the first virtual address space, the second virtual address space and the first virtual address space are mapped to a same first physical address space, a physical address to which the first virtual address is mapped corresponds to image data in a first format, and a physical address to which the second virtual address is mapped corresponds to image data in a second format.

According to the invention, the GPU includes a first memory management unit (MMU), and the hardware virtualization hypervisor includes a format conversion processor. The first MMU is configured to translate the first virtual address into an intermediate virtual address, where the intermediate virtual address is a virtual address in the second virtual address space. The format conversion processor is configured to map the intermediate virtual address to the second virtual address in the second virtual address space.

In a possible not claimed design, the first MMU is configured to obtain, based on a first mapping relationship, the intermediate virtual address corresponding to the first virtual address in the second virtual address space, where the first mapping relationship is a mapping relationship between the first virtual address space and the second virtual address space.

In a possible design, the hardware virtualization hypervisor includes a second MMU, and the second MMU is configured to: obtain, based on a second mapping relationship, a first physical address corresponding to the second virtual address in the first physical address space, where the second mapping relationship is a mapping relationship between the second virtual address space and the first physical address space.

In a possible design, the apparatus further includes a central processing unit (CPU), and a virtualization software agent runs on the CPU. The virtualization software agent is configured to: obtain a graphics processing request sent to the GPU, where the graphics processing request includes the first virtual address space and the first physical address space; and construct the second virtual address space based on the first virtual address space and the first physical address space.

In a possible not claimed design, the virtualization software agent is further configured to obtain the first mapping relationship and the second mapping relationship based on the first virtual address space and the first physical address space.

In a possible design, the virtualization software agent is specifically configured to: obtain a size of a physical page (PP) corresponding to the first physical address space and a size of a virtual page (VP) corresponding to the first virtual address space; and map the first physical address space to a consecutive virtual memory space to obtain the second virtual address space, where a size of a virtual physical page (VPP) corresponding to the second virtual address space is greater than the size of the PP and the size of the VP.

In a possible design, the GPU includes a first MMU, and the hardware virtualization hypervisor includes a snoop filter and a format conversion processor. The first MMU is configured to translate the first virtual address into an intermediate virtual address. The snoop filter is configured to: determine whether the intermediate virtual address belongs to the second virtual address space; and when the intermediate virtual address belongs to the second virtual address space, send the intermediate virtual address to the format conversion processor. The format conversion processor is configured to map the intermediate virtual address to the second virtual address in the second virtual address space.

In a possible design, the format conversion processor is specifically configured to: obtain pixel coordinates corresponding to the intermediate virtual address; and obtain the second virtual address based on the pixel coordinates.

In a possible design, if the image data in the first format is compressed data that needs to be read by the GPU, the compressed data includes a plurality of compressed graphics blocks. The format conversion processor is specifically configured to: obtain pixel coordinates corresponding to the intermediate virtual address; obtain, based on the pixel coordinates, compression offset information of a target compressed graphics block corresponding to the intermediate virtual address; and obtain the second virtual address through calculation based on the compression offset information. The format conversion processor is further configured to decompress the read target compressed graphics block.

In a possible design, if the image data in the first format is compressed data to be written by the GPU, the format conversion processor is specifically configured to: obtain pixel coordinates corresponding to the intermediate virtual address; obtain, based on the pixel coordinates, an address of header data of the to-be-written compressed data; and obtain the second virtual address based on the address of the header data.

In a possible design, the format conversion processor is specifically configured to: obtain pixel coordinates corresponding to the intermediate virtual address; obtain a signature of a pixel corresponding to the pixel coordinates; and obtain, based on the signature, the second virtual address corresponding to the signature. If the image data in the first format is encrypted data that needs to be read by the GPU, the format conversion processor is further configured to decrypt the read image data and send the decrypted image data to the GPU.

The first virtual address mentioned in the first aspect and the second aspect may be equivalent to a target virtual address in a virtual address space mentioned in the following third aspect and the fourth aspect. The first virtual address space mentioned in the first aspect and the second aspect is equivalent to the virtual address space mentioned in the third aspect and the fourth aspect. The second virtual address space mentioned in the first aspect and the second aspect is equivalent to a virtual physical address space mentioned in the third aspect and the fourth aspect. The first physical address space mentioned in the first aspect and the second aspect is equivalent to a physical address space mentioned in the third aspect and the fourth aspect. The intermediate virtual address mentioned in the first aspect and the second aspect is equivalent to an intermediate physical address mentioned in the third aspect and the fourth aspect. The second virtual address mentioned in the first aspect and the second aspect is equivalent to a target virtual physical address mentioned in the third aspect and the fourth aspect. The first physical address mentioned in the first aspect and the second aspect is equivalent to a target physical address mentioned in the third aspect and the fourth aspect. When the intermediate physical address in the third aspect and the fourth aspect belongs to the second virtual address space, the intermediate physical address mentioned in the third aspect and the fourth aspect is a first virtual physical address, and the first virtual physical address is equivalent to the intermediate virtual address mentioned in the first aspect and the second aspect.

According to a third aspect, where all features of the third aspect including those below are not claimed, a graphics processing method is provided. The method includes: A virtualization software agent constructs a virtual physical address space, where the virtual physical address space is a memory space other than a virtual address space and a physical address space. A hardware virtualization hypervisor maps an address of to-be-accessed image data in a non-native format in the virtual physical address space, to obtain a target virtual physical address of image data in a native format; and obtains a target physical address corresponding to the target virtual physical address, and accesses image data in the target physical address. A physical address to which a virtual address in the virtual address space is mapped corresponds to image data in a first format, and the physical address to which the target virtual physical address in the virtual physical address space is mapped corresponds to image data in a second format.

In this embodiment of this application, the virtual physical address space is added between the existing virtual address space and the existing physical address space, and pixel-level address mapping is completed in the newly added virtual physical address space. An address of an image in the non-native format is mapped to an address of an image in the native format that can be accessed by a GPU. Further, in this embodiment of this application, one-time address mapping from the virtual address to the physical address in the conventional technology is split into two times of address mapping: mapping from the virtual address to the virtual physical address and mapping from the virtual physical address to the physical address. In this way, the GPU can read or render the image in the non-native format without explicitly performing format conversion. This avoids applying for an additional local GPU buffer space, avoids a plurality of migrations between a format conversion processor and the buffer, reduces memory consumption, avoids a delay, and reduces bandwidth and power consumption.

It should be understood that in this embodiment of this application, discrete physical addresses are first mapped to a consecutive virtual physical page (VPP) address space (the virtual physical address space), and then an arrangement manner of the addresses is changed in the virtualized consecutive space. Physical addresses to which the changed virtual addresses are mapped correspond to the image data in the second format. Specifically, image data in the physical address space accessed in a sequence of the changed virtual addresses is the image data in the second format. Format conversion in this embodiment of this application is implemented by changing the arrangement manner of the addresses in the virtual space. Both a VPP address in the non-native format before format mapping and a VPP address in the native format after format mapping belong to this consecutive VPP address space, but the arrangement manner is changed. When the GPU accesses real physical addresses in the non-native format in the sequence of the mapped virtual physical addresses, the GPU accesses graphics data in the native format, that is, the GPU reads or writes the image data in a sequence of the graphics data in the converted native format. Therefore, in this application, in this virtualization manner, no additional format conversion buffer space is required in a sampling process of the GPU, and an actual format conversion process is omitted. In this way, the GPU samples graphics data in the non-native format at low costs. Similarly, when a physical address in the non-native format is obtained based on the virtual physical address when data is really rendered, a sequence of rendering the graphics data based on the physical address in the non-native format is the sequence of rendering the graphics data in the native format for the GPU. Therefore, in this application, in this virtualization manner, no additional format conversion buffer space is required in a rendering process of the GPU, and the actual format conversion process is omitted. In this way, the GPU renders the graphics data in the native format to a memory in the non-native format at low costs.

In a possible design, before the hardware virtualization hypervisor maps the address of the to-be-accessed image data in the non-native format in the virtual physical address space, the method further includes: obtaining a target virtual address to be accessed by the graphics processing unit (GPU); and obtaining, by a memory management unit (MMU) of the GPU based on a first mapping relationship, a first virtual physical address corresponding to the target virtual address in the virtual physical address space, where the first mapping relationship is a mapping relationship between the virtual address space and the virtual physical address space. That a hardware virtualization hypervisor maps an address of to-be-accessed image data in a non-native format in the virtual physical address space, to obtain a target virtual physical address of image data in a native format specifically includes: The hardware virtualization hypervisor maps the first virtual physical address in the virtual physical address space to obtain the target virtual physical address.

In a possible design, the obtaining a target physical address corresponding to the target virtual physical address specifically includes: A second MMU in the hardware virtualization hypervisor obtains, based on a second mapping relationship, the target physical address corresponding to the target virtual physical address, where the second mapping relationship is a mapping relationship between the virtual physical address space and the physical address space.

In a possible design, before the virtualization software agent constructs the virtual physical address space, the method further includes: obtaining a graphics processing request sent to the GPU, where the graphics processing request includes the virtual address space and the physical address space of the image in the non-native format. That a virtualization software agent constructs a virtual physical address space specifically includes: The virtualization software agent constructs the virtual physical address space based on the virtual address space and the physical address space.

In a possible design, the virtualization software agent further obtains the first mapping relationship and the second mapping relationship when constructing the virtual physical address space based on the virtual address space and the physical address space.

In a possible design, that a virtualization software agent constructs a virtual physical address space specifically includes:
obtaining a size of a physical page (PP) corresponding to the physical address space and a size of a virtual page (VP); and constructing the virtual physical address space based on the size of the PP and the size of the VP, where a size of a virtual physical page (VPP) corresponding to the virtual physical address space is greater than the size of the PP and the size of the VP.

In a possible design, the hardware virtualization hypervisor includes a filter and a format conversion processor. Before the hardware virtualization hypervisor maps the address of the to-be-accessed image data in the non-native format in the virtual physical address space, the method further includes: obtaining a target virtual address to be accessed by the graphics processing unit (GPU); mapping, by a memory management unit (MMU) of the GPU, the target virtual address to an intermediate physical address; determining, by the filter, whether the intermediate physical address belongs to the virtual physical address space; and when the intermediate physical address belongs to the virtual physical address space, determining, by the filter, the intermediate physical address as a first virtual physical address, and sending the first virtual physical address to the format conversion processor. The format conversion processor performs pixel-level format mapping on the first virtual physical address in the virtual physical address space to obtain the target virtual physical address.

In a possible design, that the hardware virtualization hypervisor maps the first virtual physical address in the virtual physical address space to obtain the target virtual physical address includes: obtaining pixel coordinates corresponding to the first virtual physical address; and obtaining, based on the pixel coordinates, the target virtual physical address corresponding to the pixel coordinates.

In a possible design, if the to-be-accessed image data in the non-native format is compressed data that needs to be read by the GPU, the compressed data includes a plurality of compressed graphics blocks. That the hardware virtualization hypervisor maps the first virtual physical address in the virtual physical address space to obtain the target virtual physical address includes: obtaining pixel coordinates corresponding to the first virtual physical address; obtaining, based on the pixel coordinates, compression offset information of a target compressed graphics block corresponding to the first virtual physical address; and obtaining the target virtual physical address through calculation based on the compression offset information. The method further includes: decompressing the read target compressed graphics block.

In a possible design, if the to-be-accessed image data in the non-native format is compressed data to be written by the GPU, that the hardware virtualization hypervisor maps the first virtual physical address in the virtual physical address space to obtain the target virtual physical address includes: obtaining pixel coordinates corresponding to the first virtual physical address; obtaining, based on the pixel coordinates, an address of header data of the to-be-written compressed data; and obtaining the target virtual physical address based on the address of the header data.

In a possible design, that the hardware virtualization hypervisor maps the first virtual physical address in the virtual physical address space to obtain the target virtual physical address includes: obtaining pixel coordinates corresponding to the first virtual physical address; obtaining a signature of a pixel corresponding to the pixel coordinates; and obtaining, based on the signature, the target virtual physical address corresponding to the signature. If the to-be-accessed image data in the non-native format is encrypted data that needs to be read by the GPU, the method further includes: decrypting the read image data and sending the decrypted image data to the GPU.

According to a fourth aspect, where all features of the fourth aspect including those below are not claimed, a graphics processing apparatus is provided. The apparatus includes a graphics processing unit (GPU), a central processing unit (CPU), and a hardware virtualization hypervisor, and a virtualization software agent runs on the CPU. The virtualization software agent is configured to construct a virtual physical address space, where the virtual physical address space is a memory space other than a virtual address space and a physical address space. The hardware virtualization hypervisor is configured to map an address of to-be-accessed image data in a non-native format in the virtual physical address space to obtain a target virtual physical address of image data in a native format. The hardware virtualization hypervisor is further configured to: obtain a target physical address corresponding to the target virtual physical address, and access image data in the target physical address.

In a possible design, the virtualization software agent is further configured to obtain a target virtual address to be accessed by the graphics processing unit (GPU). The GPU further includes a memory management unit (MMU), and the MMU is configured to obtain, based on a first mapping relationship, a first virtual physical address corresponding to the target virtual address in the virtual physical address space, where the first mapping relationship is a mapping relationship between the virtual address space and the virtual physical address space. The hardware virtualization hypervisor is configured to map the first virtual physical address in the virtual physical address space to obtain the target virtual physical address.

In a possible design, the hardware virtualization hypervisor includes a second MMU, and the second MMU is configured to obtain, based on a second mapping relationship, the target physical address corresponding to the target virtual physical address, where the second mapping relationship is a mapping relationship between the virtual physical address space and the physical address space.

In a possible design, the virtualization software agent is further configured to obtain a graphics processing request sent to the GPU, where the graphics processing request includes the virtual address space and the physical address space of the image in the non-native format. The virtualization software agent is configured to construct the virtual physical address space based on the virtual address space and the physical address space.

In a possible design, the virtualization software agent is further configured to obtain the first mapping relationship and the second mapping relationship when constructing the virtual physical address space based on the virtual address space and the physical address space.

In a possible design, the virtualization software agent is configured to: obtain a size of a physical page (PP) corresponding to the physical address space and a size of a virtual memory (VP); and construct the virtual physical address space based on the size of the PP and the size of the VP, where a size of a virtual physical page (VPP) corresponding to the virtual physical address space is greater than the size of the PP and the size of the VP.

In a possible design, the hardware virtualization hypervisor includes a snoop filter and a format conversion processor.

The snoop filter is configured to obtain a target virtual address to be accessed by the graphics processing unit (GPU), and an MMU of the GPU is configured to map the target virtual address to an intermediate physical address. The snoop filter is configured to: determine whether the intermediate physical address belongs to the virtual physical address space; and when the intermediate physical address belongs to the virtual physical address space, determine the intermediate physical address as a first virtual physical address, and send the first virtual physical address to the format conversion processor. The format conversion processor is configured to perform pixel-level format mapping on the first virtual physical address in the virtual physical address space to obtain the target virtual physical address.

In a possible design, the hardware virtualization hypervisor is configured to: obtain pixel coordinates corresponding to the first virtual physical address; and obtain, based on the pixel coordinates, the target virtual physical address corresponding to the pixel coordinates.

In a possible design, if the to-be-accessed image data in the non-native format is compressed data that needs to be read by the GPU, the compressed data includes a plurality of compressed graphics blocks. The hardware virtualization hypervisor is configured to: obtain pixel coordinates corresponding to the first virtual physical address; obtain, based on the pixel coordinates, compression offset information of a target compressed graphics block corresponding to the first virtual physical address; and obtain the target virtual physical address through calculation based on the compression offset information. The hardware virtualization hypervisor is further configured to decompress the read target compressed graphics block.

In a possible design, if the to-be-accessed image data in the non-native format is compressed data to be written by the GPU, the hardware virtualization hypervisor is configured to: obtain pixel coordinates corresponding to the first virtual physical address; obtain, based on the pixel coordinates, an address of header data of the to-be-written compressed data; and obtain the target virtual physical address based on the address of the header data.

In a possible design, the hardware virtualization hypervisor is configured to: obtain pixel coordinates corresponding to the first virtual physical address; obtain a signature of a pixel corresponding to the pixel coordinates; and obtain, based on the signature, the target virtual physical address corresponding to the signature. The hardware virtualization hypervisor is further configured to decrypt the read image data and send the decrypted image data to the

GPU.

According to a fifth aspect, where all features of the fifth aspect including those below are not claimed, a graphics processing method is provided. The method includes: obtaining a to-be-accessed first virtual address, where the first virtual address belongs to a first virtual address space; and translating the first virtual address into an intermediate virtual address, where the intermediate virtual address belongs to a second virtual address space, and the intermediate virtual address can be mapped to a second virtual address in the second virtual address space. The second virtual address space is different from the first virtual address space, the second virtual address space and the first virtual address space are mapped to a same first physical address space, a physical address to which the first virtual address is mapped corresponds to image data in a first format, and a physical address to which the second virtual address is mapped corresponds to image data in a second format.

Therefore, in this embodiment of this application, pixel-level address mapping can be completed in the newly added second virtual address space, and an address of an image in a non-native format such as the first format is mapped to an address of an image in a native format such as the second format that can be accessed by a GPU, so that the GPU can read or render the image in the non-native format without explicitly performing format conversion. This avoids applying for an additional local GPU buffer space, avoids a plurality of migrations between a format conversion processor and the buffer, reduces memory consumption, avoids a delay, and reduces bandwidth and power consumption.

In a possible design, the translating the first virtual address into an intermediate virtual address specifically includes: obtaining, based on a first mapping relationship, the intermediate virtual address corresponding to the first virtual address in the second virtual address space, where the first mapping relationship is a mapping relationship between the first virtual address space and the second virtual address space.

In a possible design, before the generating a to-be-accessed first virtual address, the method further includes: receiving the first virtual address space and the second virtual address space; and establishing the first mapping relationship.

According to a sixth aspect, a GPU is provided where all features of the sixth aspect including those below are not claimed. The GPU includes a transmission interface and a memory management unit (MMU). The transmission interface is configured to obtain a to-be-accessed first virtual address, where the first virtual address belongs to a first virtual address space. The MMU is configured to translate the first virtual address into an intermediate virtual address, where the intermediate virtual address belongs to a second virtual address space, and the intermediate virtual address can be mapped to a second virtual address in the second virtual address space. The second virtual address space is different from the first virtual address space, the second virtual address space and the first virtual address space are mapped to a same first physical address space, a physical address to which the first virtual address is mapped corresponds to image data in a first format, and a physical address to which the second virtual address is mapped corresponds to image data in a second format.

In a possible design, the MMU is configured to obtain, based on a first mapping relationship, the intermediate virtual address corresponding to the first virtual address in the second virtual address space, where the first mapping relationship is a mapping relationship between the first virtual address space and the second virtual address space.

In a possible design, the MMU is configured to: receive the first virtual address space and the second virtual address space; and establish the first mapping relationship.

Therefore, for the GPU, a sequence of sampling graphics data based on PP addresses in the non-native format is actually a sequence of sampling the graphics data based on addresses in the native format. In this case, for a sampling process, a sampling sequence in which the GPU finally samples the graphics data may be different from a sampling sequence in which the GPU actually samples the graphics data based on real physical addresses. When the sampling sequence is changed, for the GPU, graphics data obtained through sampling is graphics data in the native format that can be recognized and processed by the GPU. Therefore, a sequence of graphics data finally read from a memory based on physical addresses in the non-native format is a graphics format that can be recognized by the GPU. Similarly, for a rendering process, when the GPU renders graphics data in the native format, the graphics data may first correspond to the graphics data in the native format based on a virtual physical address VPP in the native format in this application, and then the virtual physical address corresponds to a physical address in the non-native format. In this way, when the GPU needs to write the graphics data in the native format into a memory in the non-native format, graphics data finally written into the memory is still written based on the physical address in the non-native format, and the graphics data written into the memory is graphics data in the non-native format that cannot be recognized by the GPU.

### BRIEF DESCRIPTION OF DRAWINGS

FIG. 1 is a schematic diagram of a scenario of sampling and rendering graphics data in a non-native format in the conventional technology;
FIG. 2 is a schematic diagram of functional modules inside a GPU according to an embodiment of this application;
FIG. 2A is a schematic diagram of an address mapping relationship obtained when data is sampled or rendered in the conventional technology;
FIG. 2B is a schematic diagram of comparison between an address space structure according to an embodiment of this application and an address space structure in the conventional technology;
FIG. 2C-1 and FIG. 2C-2 is a schematic diagram of an address mapping relationship according to an embodiment of this application;
FIG. 2D is a schematic diagram of an address mapping relationship according to an embodiment of this application;
FIG. 2E is a schematic diagram of an address mapping relationship according to an embodiment of this application;
FIG. 2F is a schematic diagram of an address mapping relationship obtained when data in a non-native format is sampled or rendered according to an embodiment of this application;
FIG. 2G is a schematic diagram of a process of sampling or/and rendering data in a non-native format according to an embodiment of this application;
FIG. 3 is a schematic diagram of a structure of a terminal device according to an embodiment of this application;
FIG. 4 is a schematic diagram of a structure of a SoC according to an embodiment of this application;
FIG. 5 is a schematic flowchart of a graphics processing method according to an embodiment of this application;
FIG. 6 is a hardware and software architectural diagram of sampling graphics data in a non-native format according to an embodiment of this application;
FIG. 7 is a schematic flowchart of a graphics processing method according to an embodiment of this application;
FIG. 8 is a schematic diagram of a structure of a terminal device according to an embodiment of this application; and
FIG. 9 is a schematic diagram of a structure of a terminal device according to an embodiment of this application.

In the following description, features which in the above summary of the invention have been marked as "not claimed" or "according to the invention" are also hereinafter, when they are described and explained with reference to the drawings, to be understood as "not claimed" or "according to the invention".

### DESCRIPTION OF EMBODIMENTS

For ease of understanding, example descriptions of some concepts related to this application are provided for reference as follows:
A GPU is also referred to as a display core, a vision processing unit, or a display chip, and is a microprocessor dedicated to performing image operation on a personal computer, a workstation, a game console, and some mobile devices (such as a tablet computer and a smartphone). For example, the GPU is configured to: convert and drive display information required by a computer system, provide a line scanning signal to a display, and control correct display of the display. The GPU is an important component that connects the display and a motherboard of the personal computer, and is also one of important devices for "human-computer dialog".

A virtual address (virtual address) is a logical address used by a program to access a memory.

A physical address (physical address) is an address located on an addressing bus. If a central processing unit (Central Processing Unit, CPU) performs a read operation, a circuit may read, based on a value of each bit of the physical address, data in a physical memory of the corresponding address into a data bus for transmission. If the CPU performs a write operation, the circuit may write content on the data bus into the physical memory of the corresponding address based on the value of each bit of the physical address.

A memory management unit (Memory Management Unit, MMU) is a control line in the CPU that is used to manage a virtual memory and a physical memory, and is also responsible for mapping a virtual address to a physical address and providing memory access authorization of a hardware mechanism and a multi-user and multiprocess operating system.

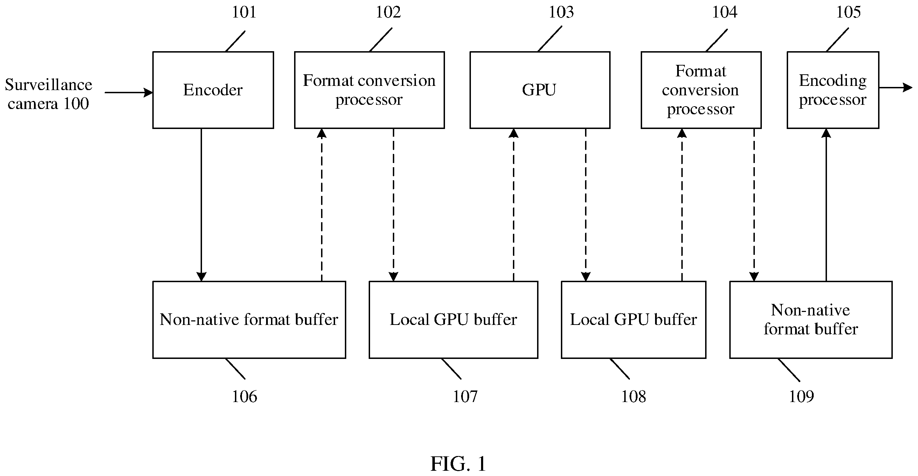

In a typical scenario, as shown in FIG. 1, the scenario is used to post-process and render a video stream captured by a surveillance camera 100, and a rendering result is output after secondary encoding performed by an encoding processor 105. Specifically, the original video stream of the surveillance camera 100 is encoded by an encoder 101, and an encoding result is written into a non-native format buffer 106 in a non-GPU native format. The encoder 101 integrated into a system on chip (System on Chip, SoC) typically has a specific proprietary format of a vendor, and the specific proprietary format includes various information of transformation, compression, and intellectual property protection. A GPU 103 cannot directly sample the proprietary format, and the proprietary format may be converted into a GPU native format by a format conversion processor 102. Graphics data in the converted GPU native format is stored in a local GPU buffer 107. In this way, the GPU 103 may sample the graphics data from the local GPU buffer 107 for GPU rendering, and a rendering result is written into a local GPU buffer 108 in the GPU native format. However, the encoding processor 105 cannot directly accept graphics data in the GPU native format in the local GPU buffer 108. Therefore, another format conversion processor 104 is further required to read the graphics data in the local GPU buffer 108 through a bus, and then convert the format of the graphics data into a format acceptable to the encoder 105. Graphics data in this acceptable format is written into a non-native format buffer 109 through a bus. In this way, each migration of data in this scenario includes migration of the data between the buffer and the processor, and an additional buffer space needs to be applied for. Consequently, memory is consumed, a delay is generated, bandwidth and power consumption are wasted, and costs are high.

In this application, the foregoing scenario in which the GPU samples or renders graphics data in the non-native format may be applied to a process in which the GPU samples or renders a graphic, to sample or render the graphic in the non-native format at low costs by the GPU.

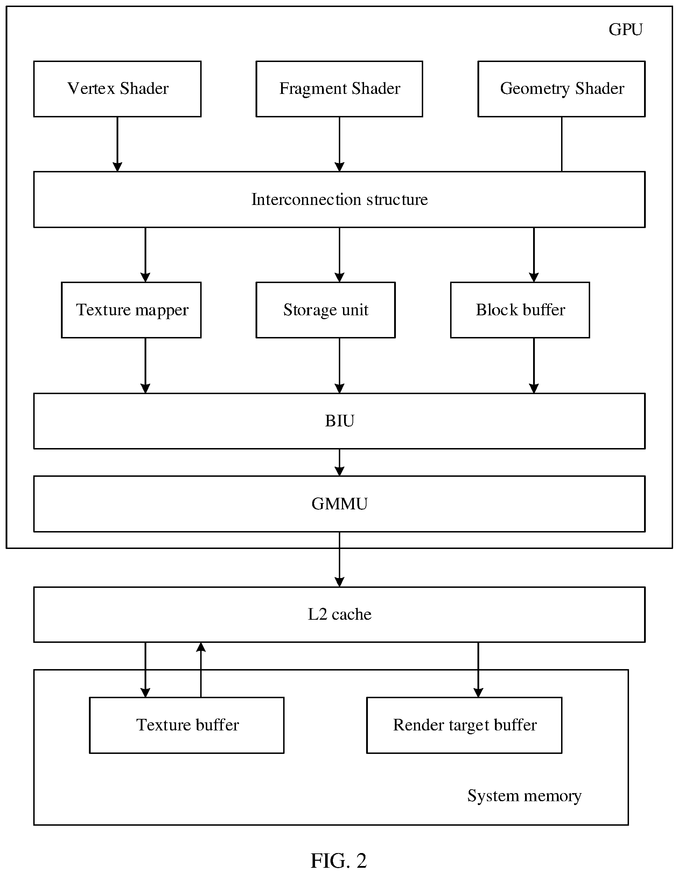

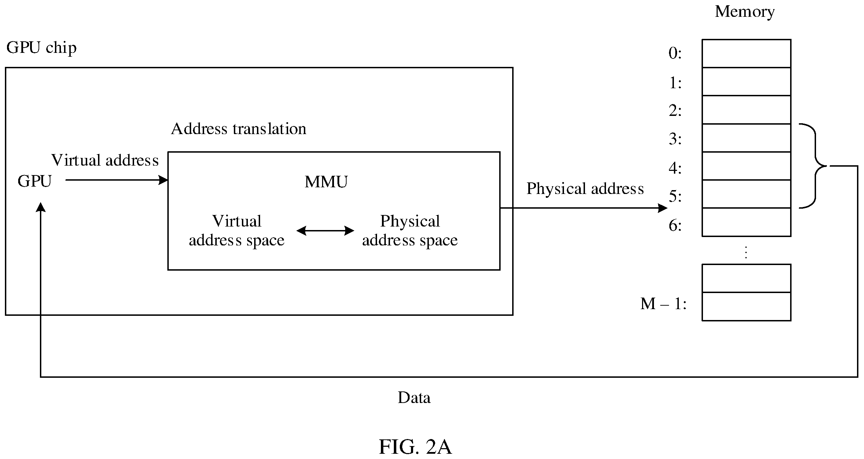

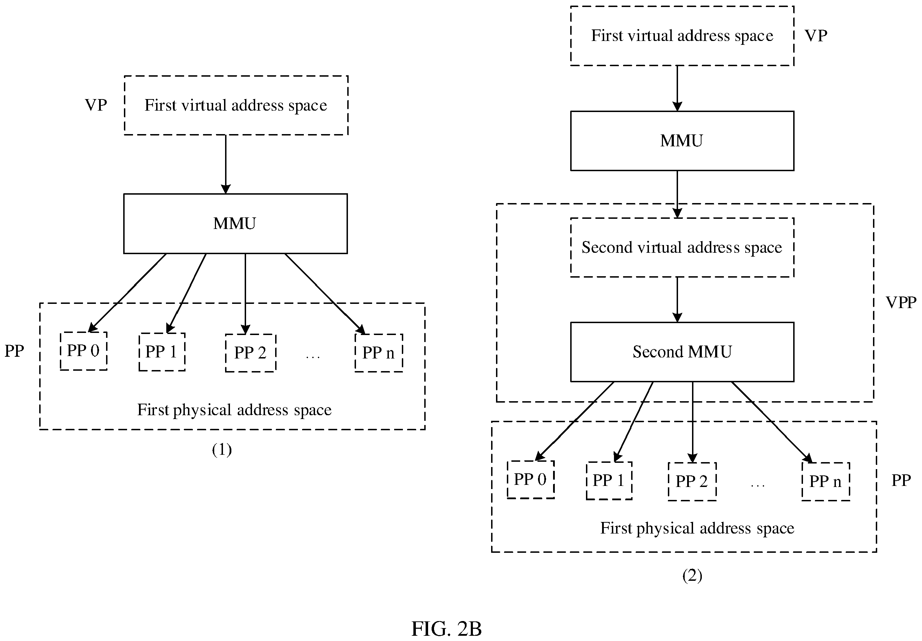

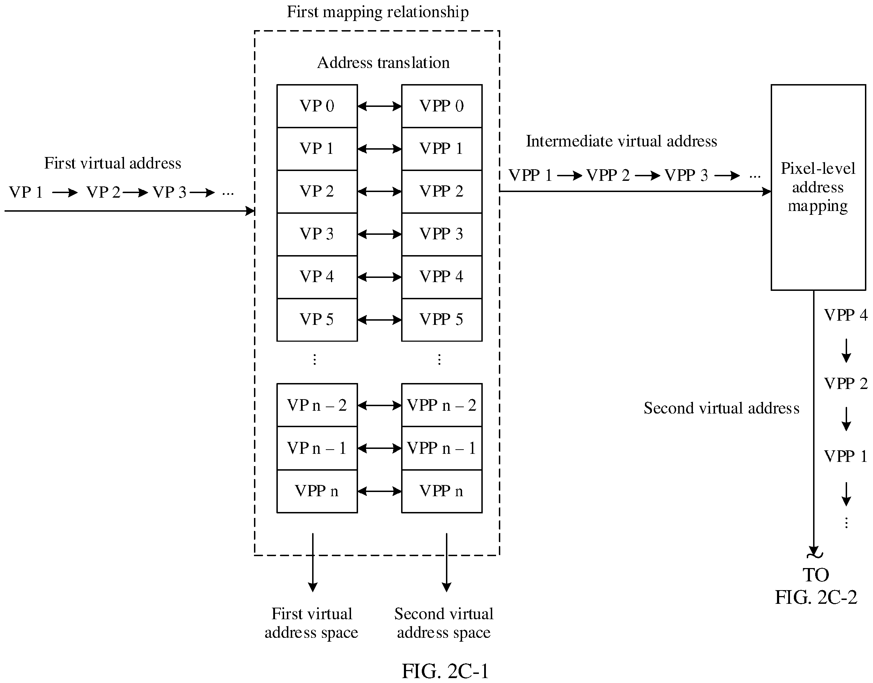

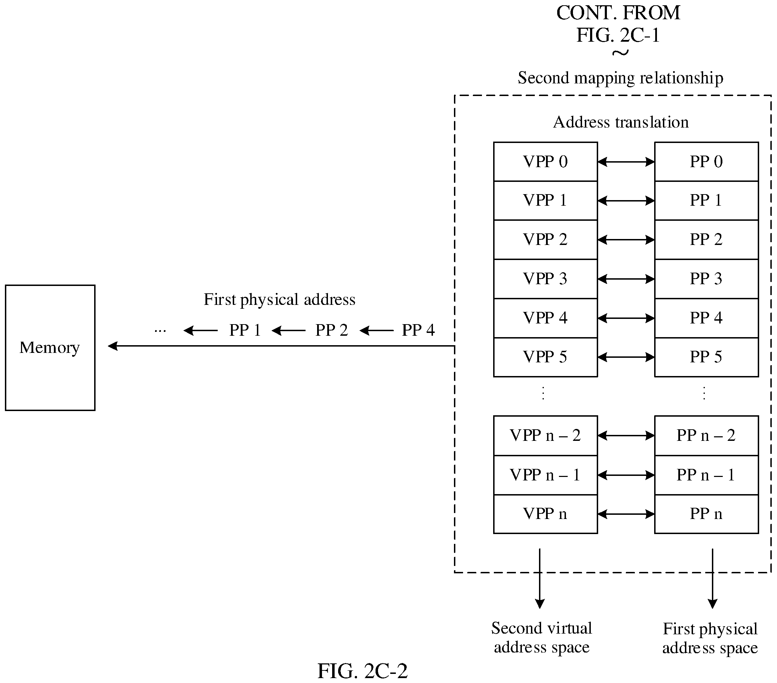

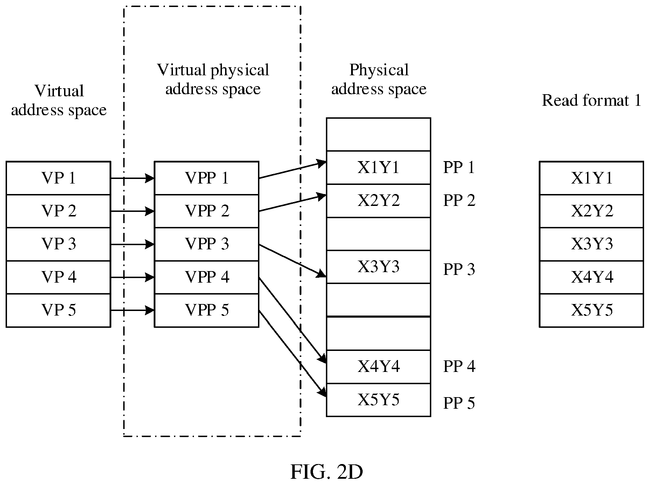

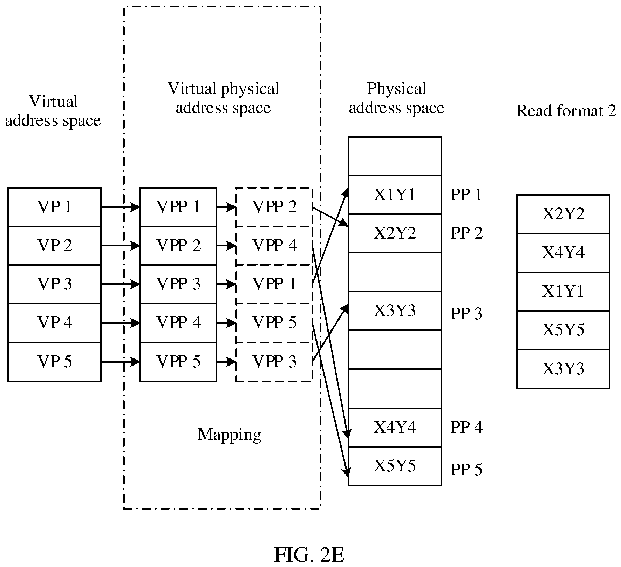

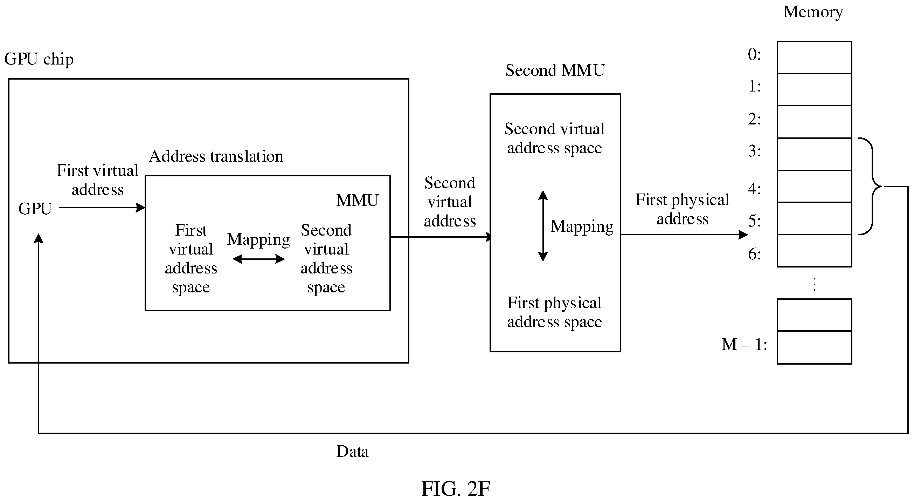

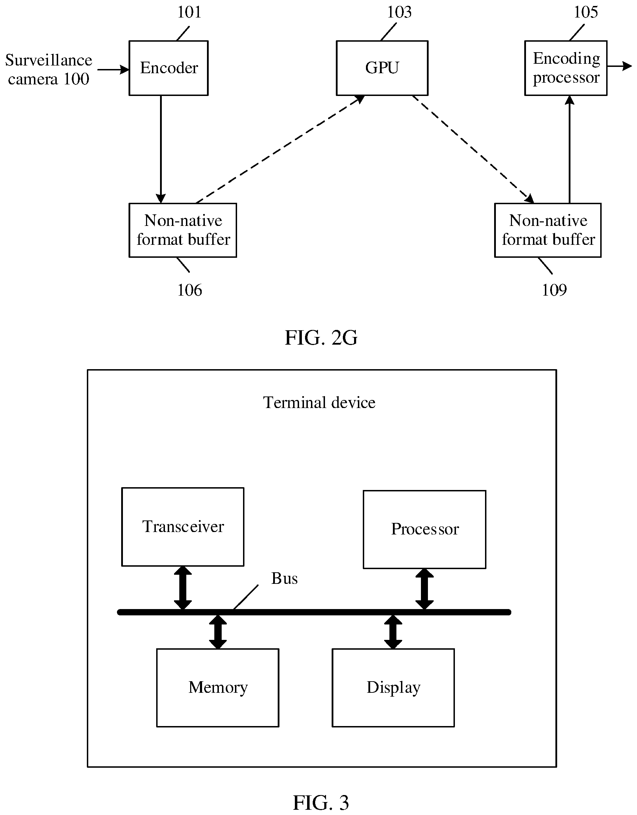

Herein, functional units inside the GPU in this application are first described. FIG. 2 is a schematic diagram of a structure of functional units inside a GPU.

Currently, a GPU architecture has evolved from a fixed function pipeline to a programmable shader (shader) processor architecture. Refer to FIG. 2. The shader processor may be classified into at least three types: a vertex shader (vertex shader), a fragment shader (fragment shader), and a geometry shader (geometry shader). A program of the vertex shader includes instructions for performing an operation on one vertex instance. A program of the fragment shader includes instructions for processing a fragment, and generally includes: sampling a texture of the fragment from a texture sample buffer (texture sample buffer), and calculating a reflected light source on the fragment to obtain a final shading result. A program of the geometry shader is configured to indicate internal division of the GPU to perform geometry processing. Although different types of shaders run different types of programs, one normalized architecture usually runs one normalized instruction set in terms of a hardware structure. The instruction set includes arithmetic, memory load/store, shift, and the like similar to a general-purpose scalar processor. Each instruction at the foreground of each of these shader processors runs on a plurality of data instances, and the shader processor has a usual single-instruction multiple-data structure. These shader processors further need to communicate with the fixed function pipeline to complete graphics functions. The graphics functions include a rasterizer (rasterizer) and a texture mapper (texture mapper). The rasterizer is configured to calculate pixels corresponding to each shading fragment. The texture mapper is configured to calculate an address of a texel (texel) to be obtained after perspective transformation. Both storage operations of the shader and the fixed function pipeline are mapped to virtual addresses. In memory management, a page is a smallest unit of an address space. All virtual addresses that can be used by one application are referred to as a virtual address space. The virtual address space is usually divided at a smaller granularity: a virtual page (Virtual page, VP). One virtual address space includes a series of virtual addresses. The virtual address space is mapped to a real double data rate (Double Data Rate, DDR) space, namely, a physical address space. The physical address space is also divided into a series of physical pages (Physical Page, PP). Sizes of the VP and the PP may usually be the same, for example, may be 4 KB. For a process, a virtual address is used. Each process maintains a separate page table. The page table is an array structure that stores a status of each VP, including whether to map and cache the VP. During process execution, when a value stored in a virtual address needs to be accessed, the CPU first finds a VP in which the virtual address is located, finds a value corresponding to a page number of the VP in a page table according to the page table, then finds a physical page number corresponding to the value, and obtains a physical address in a PP corresponding to the virtual address. This process may be referred to as address translation from the virtual address to the physical address. Briefly, the address translation refers to a process of finding a physical address based on a virtual address when a cache hit occurs.

Generally, a memory management unit (Memory Management Unit, MMU) of a graphic is configured to manage a mapping relationship between the virtual address space and the physical address space. Translation of the virtual address into the physical address is completed by the MMU. In other words, the physical address corresponding to the virtual address is obtained based on the mapping relationship that is between the virtual address space and the physical address space and that is stored in the MMU. For example, one texture buffer (an area in which graphics data is stored) maps to a consecutive virtual address space in the texture mapper and a group of scattered physical pages in the DDR space.

A rendering process is used as an example. When rendering a fragment, a fragment shader sends a texture sampling instruction to the texture mapper, and the texture mapper sends a virtual address of a texel obtained through calculation to a bus interface unit (Bus Interface Unit, BIU), to find a physical address corresponding to the virtual address by using the MMU connected to the BIU. For a tile-based architecture used by a current system, rendering is performed at a granularity of a tile (tile), and an intermediate result of rendering may be stored in a render target buffer (render target buffer) based on the physical address. In some instances, the system has an L2 cache. For a sampling process, in some instances, the system has the L2 cache (level 2 cache). If a currently sampled texel is not found in the L2 cache, the texel reads content in the texture buffer (texture buffer) by using a bus operation.

As mentioned in the foregoing process, the MMU manages the mapping relationship that is between the virtual address space and the physical address space and that is applied for by the application. In other words, the MMU stores a mapping relationship table for translating the virtual address into the physical address. Content of this table is managed by an operating system. FIG. 2A is a schematic diagram of performing address translation in an MMU based on a virtual address to obtain a physical address and accessing data in a main memory by using the physical address in the conventional technology. In this embodiment of this application, refer to FIG. 2B. Different from the conventional technology shown in (1) in FIG. 2B, in this application, one second virtual address space is added between a first virtual address space (equivalent to a virtual address space in the conventional technology) and a first physical address space (equivalent to a physical address space in the conventional technology). Refer to (2) in FIG. 2B. The second virtual address space may be divided into a series of virtual physical pages (Virtual Physical Page, VPP), and the second virtual address space is a space different from the first virtual address space and the first physical address space. The second virtual address space and the first virtual address space are mapped to a same physical address space, a physical address to which a first virtual address is mapped corresponds to image data in a first format, and a physical address to which a second virtual address is mapped corresponds to image data in a second format. A method in this embodiment of this application relates to a virtualization software agent (virtualization software agent) and a hardware virtualization hypervisor (hardware virtualization hypervisor). The second virtual address space is constructed by the virtualization software agent. If the image data in the first format is image data in a non-native format that cannot be directly accessed by a GPU, the image data in the second format is image data in a native format that can be accessed by the GPU. Subsequently, the hardware virtualization hypervisor may complete pixel-level address mapping between the native format and the non-native format on to-be-accessed data in the constructed second virtual address space. Correspondingly, in this embodiment of this application, a mapping relationship between the first virtual address in the first virtual address space and a first physical address in the first physical address space is split into a first mapping relationship and a second mapping relationship. The first mapping relationship is a mapping relationship between the first virtual address and the second virtual address in the second virtual address space, and the second mapping relationship is a mapping relationship between the second virtual address and the first physical address. The first mapping relationship is stored in a first MMU of the GPU, and the second mapping relationship is stored in a second MMU of the hardware virtualization hypervisor. During process execution, when a value stored in the first virtual address needs to be accessed, the first virtual address is first translated into the second virtual address in the second virtual address space based on the first mapping relationship in the MMU, and then the second virtual address is translated into the first physical address based on the second mapping relationship in the second MMU. In other words, in this embodiment of this application, an actual physical address is accessed through two times of address translation. In this embodiment of this application, the second virtual address space is added, and pixel-level address mapping of an image format is completed in the second virtual address space. Therefore, the GPU can access the image in the non-native format without performing explicitly performing format conversion. In other words, a format conversion processor 102 does not need to convert a proprietary format into the native format, a format processor 104 does not need to convert the native format into a format acceptable to an encoder, and there is no need to apply for an additional local GPU buffer 107 space and an additional local GPU buffer 108 space. This avoids a plurality of data migrations between the processor and the buffer, reduces memory consumption, avoids a delay, and reduces bandwidth and power consumption.

For example, refer to FIG. 2C-1 and FIG. 2C-2. A sampling process is used as an example. If the GPU sequentially sends a plurality of access requests, and each of the access requests accesses one first virtual address. Before sending the access request, the GPU first needs to perform address mapping based on a first mapping relationship. In this case, the translation of the first virtual address into the second virtual address in the second virtual address space based on the first mapping relationship in the MMU of the GPU may be understood by using the following example: If a sequence of first virtual addresses accessed by the GPU is VP 1-VP 2-VP 3- ..., physical addresses PP 1-PP 2-PP 3- ... to which VP 1-VP 2-VP 3- ... are mapped in the sequence of the first virtual addresses correspond to the image data in the first format. Intermediate virtual addresses VPP 1-VPP 2-VPP 3-... corresponding to the first virtual addresses may be obtained based on the first mapping relationship. In this case, each of the plurality of access requests sent by the GPU actually carries one intermediate virtual address. The intermediate virtual addresses are sent in a sequence of VPP 1-VPP 2-VPP 3- .... Then, pixel-level address mapping of the image format needs to be completed in the second virtual address space, and the intermediate virtual addresses in the non-native format are mapped to second virtual addresses in the native format. For example, the VPP 1 is mapped to the VPP 4, the VPP 2 is mapped to the VPP 2, and the VPP 3 is mapped to the VPP 1, so that the GPU obtains, based on the second virtual addresses in the native format and the second mapping relationship, first physical addresses that correspond to the second virtual addresses and that are used when data in the non-native format is actually accessed. In this way, the GPU accesses the graphics data in the non-native format based on the second virtual addresses in the native format. According to FIG. 2C-1 and FIG. 2C-2, a sequence of the second virtual addresses obtained after pixel-level address mapping is VPP 4-VPP 2-VPP 1- ..., and physical addresses to which VPP 4-VPP 2-VPP 1- ... are mapped in the sequence of the second virtual addresses correspond to the image data in the second format. The translation of the second virtual addresses into the first physical addresses based on the second mapping relationship in the second MMU may be understood as obtaining, in the sequence of the second virtual addresses VPP 4-VPP 2-VPP 1- ... and the second mapping relationship, the first physical addresses obtained after the second address translation. A sequence of the first physical addresses is PP 4-PP 2-PP 1- ..., and then graphics data in a memory is accessed in the sequence of the first physical addresses PP 4-PP 2-PP 1- ..., where the sequence of the first physical addresses PP 4-PP 2-PP 1- ... corresponds to the image data in the second format. If the image data in the first format is the image data in the non-native format that cannot be directly accessed by the GPU, the image data in the second format is the image data in the native format that can be accessed by the GPU, so that the GPU may sample the graphics format in the native format from the image data in the non-native format.

FIG. 2D is a schematic diagram of an example of an image format read before address mapping according to an embodiment of this application. FIG. 2E is a schematic diagram of an example of an image format read after address mapping.

The second virtual address space is constructed based on the first physical address space and the first virtual address space. In other words, a consecutive virtual memory space is created based on sizes of the first physical address space and the first virtual address space, and the consecutive virtual memory space is used as the second virtual address space. A page of the space is a virtual physical page (VPP), a page of the first virtual address space (a virtual address space shown in FIG. 2D) is a virtual page (VP), and a page of the first physical address space (a physical address space shown in FIG. 2D) is a physical page (PP). It should be understood that a size of the VPP of the constructed virtual physical address is greater than a size of the VP and a size of the PP. Before address mapping is performed, a sequence of accessing pixels stored in the first physical address space is X1Y1 in PP 1, X2Y2 in PP 2, X3Y3 in PP 3, X4Y4 in PP 4, and X5Y5 in PP 5. In this case, read image data is the image data in the first format (a format 1). In this embodiment of this application, addresses are mapped in the newly constructed second virtual address space (a virtual physical address space shown in FIG. 2D), to change a sequence of accessing the addresses, which is equivalent to changing an arrangement manner of image pixels. As shown in FIG. 2E, after address mapping is performed in the second virtual address space (a virtual physical address space shown in FIG. 2E), VPP 1 is mapped to VPP 2, VPP 2 is mapped to VPP 4, VPP 3 is mapped to VPP 1, VPP 4 is mapped to VPP 5, and VPP 5 is mapped to VPP 5. A sequence of accessing pixels stored in the first physical address space (a physical address space shown in FIG. 2E) becomes X2Y2 in PP 2, X4Y4 in PP 4, X1Y1 in PP 1, X5Y5 in PP 5, and X3Y3 in PP 3, and a pixel arrangement sequence of read image data changes. In this case, the read image data is the image data in the second format (a format 2).

In this embodiment of this application, addresses are mapped in the newly constructed second virtual address space, and a sequence of reading addresses of pixels is changed, which is equivalent to changing an arrangement manner of pixels of the read image data. According to the invention, the image in the first format is the image in the non-native format that cannot be accessed by the GPU. The image in the second format is the image in the native format that can be directly accessed by the GPU. Therefore, the GPU can access the image data in the non-native format and obtain the image data in the native format without explicitly performing format conversion.

For example, the second virtual address space in this embodiment of this application may be a segment of consecutive addresses determined based on the size of the first physical address space and the size of the first virtual address space that correspond to the process. For example, the size of the first virtual address space is 396 KB, the first physical address space is divided into 100 discrete VPs, and a size of each VP is 4 KB. In this case, a size of the second virtual address space needs to be greater than 400 KB, so that the second virtual address space can replace the first physical address space, and the first mapping relationship between the first virtual address space and the second virtual address space and the second mapping relationship between the second virtual address space and the first physical address space are established.

In this way, based on the second virtual address space in this application, as shown in FIG. 2F, if the GPU samples or renders the graphics data in the non-native format, the MMU of the GPU stores a mapping relationship between a non-native format VP address range (the first virtual address space) applied for by an application and a non-native format VPP address range (the second virtual address space) in this application. In other words, the MMU of the GPU stores a first mapping relationship query table for translating the first virtual address into the second virtual address. For example, an existing query table in the MMU of the GPU includes mapping between an address 0x8000 in the first virtual address space and an address 0x6453 in the first physical address space. In this application, when the GPU accesses a memory in the non-native format, when the mapping relationship between the first virtual address space 0x8000 and the first physical address space 0x6453 is obtained, the mapping relationship may be split into a first mapping relationship between the first virtual address space 0x8000 and a second virtual address space 0x0 and a second mapping relationship between the second virtual address space 0x0 and the first physical address space 0x6453. A query table is reloaded in the MMU of the GPU, so that the query table in the MMU of the GPU includes the first mapping relationship between the first virtual address space 0x8000 and the second virtual address space 0x0. Correspondingly, the second mapping relationship between the second virtual address space 0x0 and the first physical address space 0x6453 is stored in the second MMU of the virtualization hardware processor. When a physical address is obtained based on a virtual address, address translation may be first performed on the first virtual address 0x8000 to obtain the second virtual address 0x0, and then address translation is performed on the second virtual address 0x0 to obtain the real first physical address 0x6453 of accessed data. Based on this, in this application, a virtualization method is used to enable the GPU to sample or render the graphics data in the non-native format. This virtualization method does not require an offline explicit conversion phase and may be used to sample and render a graphic in the non-native format online. The virtualization software agent may intercept invoking of a graphics application programming interface (Application Programming Interface, API) of the GPU by the application, and the virtualization software agent may virtualize, based on the invoking, a sample buffer or a render target buffer that can be directly accessed by the GPU. These virtualized buffers may be referred to as buffers corresponding to VPPs in the native format. In the buffer corresponding to the virtualized VPP, the graphics data in the non-native format is converted into graphics data in the native format. Format conversion in this embodiment of this application is implemented by changing an address arrangement manner in the virtual space. In an example, the virtualization software agent may construct a VPP address space (the second virtual address space) based on a VP address space (the first virtual address space) and a PP address space (the first physical address space) that are applied for when the application invokes the graphics API of the GPU. A PP address to which the VP address space is mapped corresponds to the image data in the first format, namely, the image data in the non-native format. For example, a first mapping relationship between the VP address space and the VPP address space and a second mapping relationship between the VPP address space and the PP address space are obtained based on the VP address space and the PP address space. The first mapping relationship is stored in the MMU of the GPU, and the second mapping relationship is stored in the second MMU of the hardware virtualization hypervisor. The VPP address space is a consecutive virtual address space. Then, the hardware virtualization hypervisor obtains a target VPP address to be accessed by the GPU, and completes pixel-level address mapping of an image data format in the VPP address space. Graphics data accessed based on a PP address to which the target VPP address in the native format is mapped is the image data in the second format, namely, graphics data in the native format that can be accessed by the GPU. Then, the hardware virtualization hypervisor obtains a target PP address based on the target VPP address in the native format obtained after format mapping and the second mapping relationship stored in the second MMU, so that the GPU reads graphics data from the target PP address or writes graphics data into the target PP address. Because an arrangement manner of PP addresses in the non-native format obtained in a sampling process is obtained through calculation based on target VPP addresses in the native format, a sequence of sampling graphics data based on the PP addresses in the non-native format is actually a sequence of sampling the graphics data based on target VPP addresses in the native format. In this case, for the sampling process, a sampling sequence in which the GPU finally samples the graphics data may be different from a sampling sequence in which the GPU actually samples the graphics data based on real physical addresses. When the sampling sequence is changed, for the GPU, graphics data obtained through sampling is graphics data in the native format that can be recognized and processed by the GPU. Therefore, a sequence of graphics data finally read from the memory based on the PP addresses in the non-native format is a graphics format that can be recognized by the GPU. Similarly, for a rendering process, when rendering graphics data in the native format, the GPU may first obtain the graphics data in the native format based on a virtual physical address VPP address in this application, and then obtain a PP address in the non-native format based on the VPP address. In this way, when the GPU needs to write the graphics data in the native format into a memory in the non-native format, the graphics data finally written into the memory is still written based on the PP address in the non-native format, and the graphics data written into the memory is graphics data in the non-native format that cannot be recognized by the GPU. In this way, when a graphic in the non-native format is sampled or rendered in this application, an explicit format conversion phase is not required. For example, a process in which the format conversion processor 102 in FIG. 1 converts the proprietary format into the GPU native format is not required, and a process in which the format conversion processor 104 in FIG. 1 reads the graphics data in the local GPU buffer 108 through the bus, and then converts the format of the graphics data into the format acceptable to the encoder 105 is not required. In addition, a format conversion buffer is not required. For example, the local GPU buffer 107 and the local GPU buffer 108 in FIG. 1 are not required. In comparison, the sampling and rendering processes in this application may be shown in FIG. 2G. In the virtualization manner, the GPU 103 may sample the non-native format buffer 106 by using a constructed intermediate layer, namely, the second virtual address space. In addition, the GPU 103 renders data to the non-native format buffer 109 by using the intermediate layer, namely, the second virtual address space. This greatly reduces a processing delay and bandwidth of a system, reduces usage of a system memory, and reduces costs of the format conversion processor .

The virtualization software agent mentioned in the foregoing process may be implemented in a form of software, and program code of the software corresponding to the virtualization software agent may be stored in a memory of a terminal device and executed by the CPU. The hardware virtualization hypervisor may be implemented in a combination of hardware and software. Both a hardware structure of the hardware virtualization hypervisor and the GPU may be disposed on a bus in the device, and the program code of the software corresponding to the hardware virtualization hypervisor may be stored in the memory of the terminal device. In an optional case, the virtualization software agent, the hardware virtualization hypervisor, and the GPU are integrated on a same SoC.

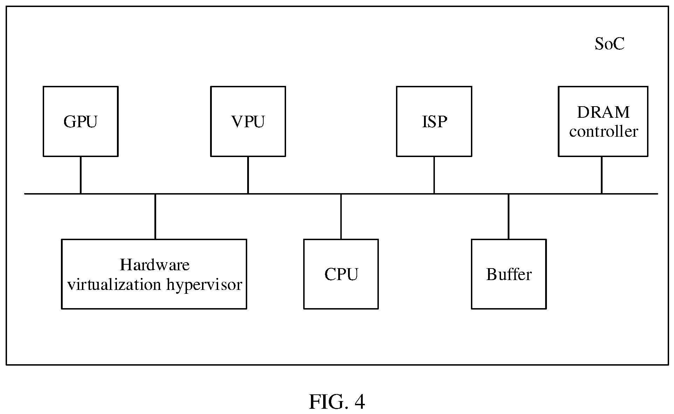

This embodiment of this application may be used in a process in which a terminal device that can display a graphic processes the graphic. The terminal device may be a mobile terminal or a non-mobile terminal. For example, the mobile terminal may be a mobile phone, a tablet computer, or another mobile device with a display function. The non-mobile terminal may be, for example, a personal computer or another device with the display function. Refer to a structure of a terminal device shown in FIG. 3. The terminal device includes a display, a processor, a memory, a transceiver, and a bus, and the memory includes the foregoing memory. The processor may include a SoC. Refer to FIG. 4. The SoC may include a GPU, a hardware virtualization hypervisor, a vector permutate unit (Vector Permutate Unit, VPU), a CPU, image signal processor (Image Signal Processing, ISP), a buffer, a dynamic random access memory (Dynamic Random Access Memory, DRAM) controller, a bus, and the like. The GPU, the VPU, the CPU, the ISP, the buffer, and the DRAM controller may be coupled by using a connector. It should be understood that, in the embodiments of this application, coupling refers to mutual connection in a specific manner, including direct connection or indirect connection by using another device, for example, connection through various interfaces, transmission cables, or buses. These interfaces are usually electrical communications interfaces, but may be mechanical interfaces or interfaces in other forms. This is not limited in this embodiment. This embodiment of this application may be specifically applied to a process in which the SoC samples and renders a graphic.

According to the foregoing descriptions, an embodiment of this application provides a graphics processing method. The method includes the following steps.
(1) A terminal device obtains a first virtual address to be accessed by a graphics processing unit (GPU), where the first virtual address belongs to a first virtual address space.
   A physical address to which the first virtual address is mapped corresponds to image data in a first format.
(2) The terminal device obtains a second virtual address based on the first virtual address, where the second virtual address belongs to a second virtual address space.

The second virtual address space is different from the first virtual address space, the second virtual address space and the first virtual address space are mapped to a same first physical address space, and a physical address to which the second virtual address is mapped corresponds to image data in a second format.

It may be learned that in this embodiment of this application, a second virtual address space is reconstructed, and the second virtual address space is different from the first virtual address space. In this application, an address in the first virtual address space may be mapped to an address in the newly added second virtual address space, and the physical address to which the second virtual address in the newly added second virtual address space is mapped corresponds to the graphics data in the second format. The image data in the second format is different from the image data in the first format. For example, if the image data in the first format is image data that cannot be directly accessed by the GPU, the image data in the second format is image data that can be accessed by the GPU. In this embodiment of this application, image format conversion is implemented by mapping the address to a newly added virtual address space, and the GPU can access an image in a non-native format without performing format conversion by a format conversion processor. This avoids applying for an additional local GPU buffer space, avoids a plurality of migrations between a format conversion processor and the buffer, reduces memory consumption, avoids a delay, and reduces bandwidth and power consumption.

The obtaining a second virtual address based on the first virtual address may include: translating the first virtual address into an intermediate virtual address by using a first MMU in the GPU, where the intermediate virtual address is a virtual address in the second virtual address space; and mapping the intermediate virtual address to the second virtual address in the second virtual address space by using a hardware virtualization hypervisor. When the first virtual address is a first virtual address in the non-native format, the intermediate virtual address may be understood as an intermediate virtual address in the non-native format, and the second virtual address may be understood as a second virtual address in a native format. In other words, when the second virtual address is obtained, one-time address translation from the first virtual address to the intermediate virtual address and one-time address mapping from the intermediate virtual address to the second virtual address need to be performed. The one-time address mapping from the intermediate virtual address to the second virtual address may be understood as completing pixel-level address mapping in the newly added second virtual address space, so that the GPU can access, based on the second virtual address, the image data corresponding to the physical address, and obtain the image data in the second format such as the native format.

The translating the first virtual address into an intermediate virtual address may include: The first MMU in the GPU may obtain, based on a first mapping relationship, the intermediate virtual address corresponding to the first virtual address in the second virtual address space, where the first mapping relationship is a mapping relationship between the first virtual address space and the second virtual address space. The first mapping relationship may be stored in the memory management unit (MMU) of the GPU. In this embodiment of this application, the first MMU may be integrated into the GPU, or may be located outside the GPU. This is not limited in this application.

After the obtaining a second virtual address based on the first virtual address, the method may further include: obtaining, by using the hardware virtualization hypervisor based on a second mapping relationship, a first physical address corresponding to the second virtual address in the first physical address space, where the second mapping relationship is a mapping relationship between the second virtual address space and the first physical address space. It may be understood that, in this application, after the first address translation, the first virtual address is translated into the intermediate virtual address. After the address mapping, the intermediate virtual address is mapped into the second virtual address. After the second address translation, the second virtual address translated into the first physical address. The intermediate virtual address in the non-native format before format mapping and the second virtual address in the native format after format mapping both belong to the consecutive second virtual address space, but an arrangement manner is changed. In the second virtual address space, when the GPU accesses real physical addresses in the non-native format in a sequence of second virtual addresses in the native format, the GPU accesses graphics data in the native format. In other words, the GPU reads or writes the image data in a sequence of the graphics data in the converted native format. Therefore, in this application, in this virtualization manner, no additional format conversion buffer space is required in a sampling process of the GPU, and an actual format conversion process is omitted. In this way, the GPU samples graphics data in the non-native format at low costs. Similarly, when a physical address in the non-native format is obtained based on the second virtual address space when data is really rendered, a sequence of rendering the graphics data based on the physical address in the non-native format is a sequence of rendering graphics data in the native format for the GPU. Therefore, in this application, in this virtualization manner, no additional format conversion buffer space is required in a rendering process of the GPU, and the actual format conversion process is omitted. In this way, the GPU renders the graphics data in the native format to a memory in the non-native format at low costs.

Because a second virtual address space needs to be reconstructed in this application, before the obtaining a second virtual address based on the first virtual address, the method may further include: obtaining, by using a virtualization software agent, a graphics processing request sent to the GPU, where the graphics processing request includes the first virtual address space and the first physical address space. Therefore, the second virtual address space may be constructed based on the first virtual address space and the first physical address space. In other words, when an application sends the graphics processing request to the GPU, in this embodiment of this application, the graphics processing request may be intercepted by using the virtualization software agent, to construct the second virtual address space based on the request. It should be understood that in this embodiment of this application, the discrete first physical address space and the first virtual address space are first mapped to a consecutive second virtual address space. Then, in the virtualized consecutive space, the graphics data in the non-native format is converted into the graphics data in the native format. Format conversion in this embodiment of this application is implemented by changing an address arrangement manner in the virtual space.

In this way, after the second virtual address space is constructed, the first mapping relationship and the second mapping relationship may be obtained based on the first virtual address space and the first physical address space.

For how the second virtual address space is obtained, a possible design provided in this application may be as follows: The virtualization software agent obtains a size of a physical page (PP) corresponding to the first physical address space and a size of a virtual page (VP) corresponding to the first virtual address space, and maps the first physical address space to a consecutive virtual memory space to obtain the second virtual address space, where a size of a virtual physical page (VPP) corresponding to the second virtual address space is greater than the size of the PP and the size of the VP. The first mapping relationship between the first virtual address space and the second virtual address space and the second mapping relationship between the second virtual address space and the first physical address space are established only when the second virtual address space constructed in this application covers the first virtual address space and the first physical address space of the real physical address.

The obtaining a second virtual address based on the first virtual address may include: translating the first virtual address into an intermediate virtual address; determining whether the intermediate virtual address belongs to the second virtual address space; and when the intermediate virtual address belongs to the second virtual address space, mapping the intermediate virtual address to the second virtual address in the second virtual address space. Because the MMU of the GPU maintains a plurality of mapping relationships, a virtual address translated in the MMU may be an actual physical address of another buffer rather than a virtual address in the second virtual address space. Therefore, determining and filtering need to be performed herein. In other words, the intermediate virtual address obtained by the MMU is not necessarily a virtual address in the first mapping relationship.

The mapping the intermediate virtual address to the second virtual address in the second virtual address space may include: obtaining pixel coordinates corresponding to the intermediate virtual address; and obtaining the second virtual address based on the pixel coordinates. Herein is an implementation process of performing pixel-level address mapping. The second virtual address in the native format may be obtained based on the pixel coordinates, so that image data of the real physical address is accessed based on the second virtual address in the native format, and the image data in the native format is obtained.

If the image data in the first format is compressed data that needs to be read by the GPU, the compressed data includes a plurality of compressed graphics blocks. The mapping the intermediate virtual address to the second virtual address in the second virtual address space may include: obtaining pixel coordinates corresponding to the intermediate virtual address; obtaining, based on the pixel coordinates, compression offset information of a target compressed graphics block corresponding to the intermediate virtual address; and obtaining the second virtual address through calculation based on the compression offset information. The method further includes: decompressing the read target compressed graphics block. Herein, when performing pixel-level address conversion is considered, image data in the non-native format stored in the memory may be image data in a compressed format. Correspondingly, when the image data is obtained through sampling, the image data further needs to be decompressed.

If the image data in the first format is compressed data to be written by the GPU, the mapping the intermediate virtual address to the second virtual address in the second virtual address space includes: obtaining pixel coordinates corresponding to the intermediate virtual address; obtaining, based on the pixel coordinates, an address of header data of the to-be-written compressed data; and obtaining the second virtual address based on the address of the header data. In other words, when the data is written, that the compressed data is stored in the memory is considered. Therefore, when the image data in the native format is stored in the memory in the non-native format, the second virtual address of the data in the compressed format needs to be obtained, so that the data is stored in a memory of the physical address based on the second virtual address.

If the image data in the first format stored in the memory is an encrypted format, the mapping the intermediate virtual address to the second virtual address in the second virtual address space may include: obtaining pixel coordinates corresponding to the intermediate virtual address; obtaining a signature of a pixel corresponding to the pixel coordinates; and obtaining, based on the signature, the second virtual address corresponding to the signature. If the image data in the first format is encrypted data that needs to be read by the GPU, the method further includes: decrypting the read image data and sending the decrypted image data to the GPU. In this case, that the image data stored in the memory is in an encrypted format needs to be considered. Therefore, when pixel-level address mapping is performed, the second virtual address in the encrypted format needs to be obtained.

According to the foregoing descriptions, in this embodiment of this application, a second virtual address space may be added to enable the GPU to directly access the image data in the non-native format.

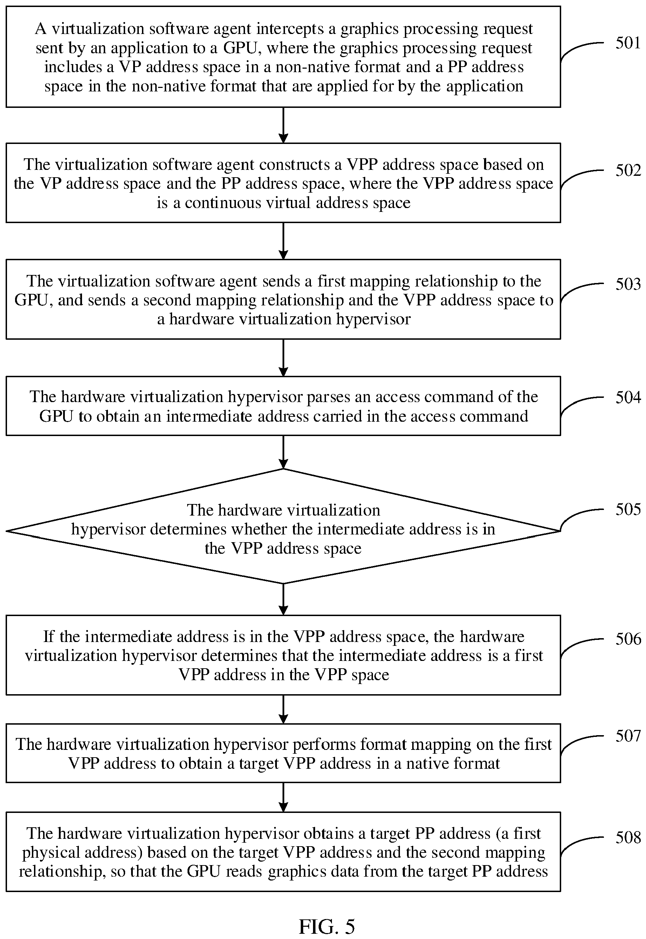

The following uses how to sample and render the graphics data in the non-native format as an example for description in this application. Refer to FIG. 5. An embodiment of this application provides a graphics processing method. A sampling process is used as an example, and the method includes the following steps.

501: A virtualization software agent intercepts a graphics processing request sent by an application to a GPU, where the graphics processing request includes a VP address space in a non-native format and a PP address space in the non-native format that are applied for by the application.

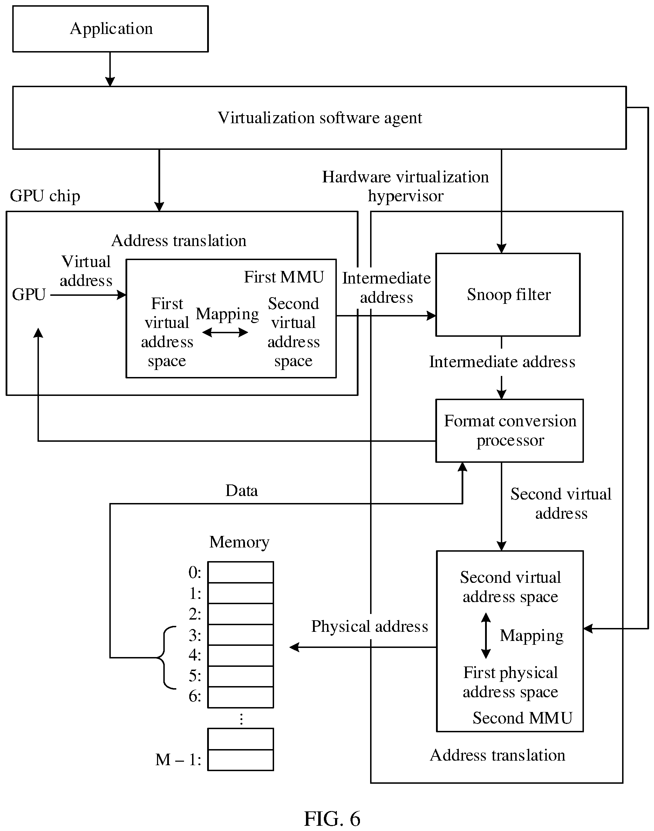

FIG. 6 is a diagram of a hardware and software architecture of sampling graphics data in the non-native format according to this application. When an application indicates the GPU to sample the graphics data, the application may send a graphics processing request to the GPU, where the graphics processing request carries a resource required for sampling, and the resource includes a texture buffer applied for by the application. Because a memory used for sampling by the GPU stores the graphics data in the non-native format for the GPU, the texture buffer includes the VP address space in the non-native format and the PP address space in the non-native format. In this case, the virtualization software agent may intercept the graphics processing request sent by the application to the GPU to parse the graphics processing request.

502: The virtualization software agent constructs a VPP address space based on the VP address space and the PP address space, where the VPP address space is a consecutive virtual address space.

For example, the virtualization software agent may parse the intercepted graphics processing request to obtain the VP address space in the non-native format and the PP address space in the non-native format that are in the graphics processing request, and further obtain a first mapping relationship between the VP address space and the VPP address space based on a mapping relationship between the VP address space and the PP address space and construct the VPP address space based on a second mapping relationship between the VPP address space and the PP address space. Herein, the VPP address space may be obtained through calculation by using a size of a PP and a size of a VP. The details have been described above, and are not described herein again. The GPU may read graphics data in a native format based on a VPP address. Correspondingly, the GPU may alternatively write a rendered image in the native format to the VPP address. In other words, a second virtual address is obtained through virtualization, and is not a real physical address. Data read or written by the GPU from the virtualized physical address is graphics data in the native format that can be accessed by the GPU. In other words, when a PP address in the non-native format is converted into a second virtual address, a pixel arrangement format of graphics data changes, and a buffered image obtained based on a mapped VPP is arranged in the native format. The graphics data in this native format can be directly accessed by the GPU.

The native format is a GPU native format, and is an image format intrinsically supported (intrinsically supported) by GPU hardware and a format in which the GPU can naturally perform a read/write operation. Common native formats are defined by a graphics API. For example, when the graphics API is an open graphics library (Open Graphics Library, OpenGL), an OpenGL ES (OpenGL for Embedded Systems), and a Direct3D of a 3D specification interface, common native formats include RGBA8888, RGBA16F, RGB10A2, SRGB8_A8_ASTC_3x3x3, and the like.

The non-native format is a format in which the GPU cannot directly perform a read/write operation. For example, the non-native format includes all formats not supported by the graphics API. These formats are generally generated in application scenarios except a graphics community. For example, the non-native format includes Y10U10V10LPacked, Y10U10V10 compressed format, ICE, and Y10U10V10.

Because graphics data corresponding to a physical address in the non-native format is stored in the memory, a PP address in the non-native format used when actually sampled data needs to be correspondingly obtained based on the VPP address space in the following step. Therefore, the method further includes the following steps.

503: The virtualization software agent sends the first mapping relationship to the GPU, and sends the second mapping relationship and the VPP address space to a hardware virtualization hypervisor.

A VPP address in the VPP address space is used to replace a PP address in the PP address space in an MMU of the GPU, and the first mapping relationship between the VP address in the VP address space and a VPP address in the VPP address space is established in the MMU of the GPU. It should be noted that, in this embodiment of this application, a hardware structure and a software program of the GPU are not changed, and the VPP address space is stored in the MMU of the GPU, and is not aware of and is passively received by the GPU. In the conventional technology, when the GPU reads or writes data, a real physical address is finally sent to the memory. The MMU in this application does not store the real physical address, but stores a mapping relationship between a VP address in the non-native format and a VPP address in a VPP address range. Therefore, when reading or writing data in the non-native format, the GPU sends a VPP address in the non-native format obtained by performing address translation on the VP address in the non-native format to the memory.

Refer to FIG. 6. The hardware virtualization hypervisor may include a snoop filter (snoop filter), a format conversion processor (format conversion processor), and a second MMU. The snoop filter is configured to determine whether a physical address of graphics data read by the GPU is in the VPP address range. The format conversion processor is configured to: perform pixel-level address mapping in a second virtual space; convert a VPP address (an intermediate virtual address) sent when the GPU reads the graphics data into a target VPP address (a second virtual address) in the native format; decompress or decrypt the to-be-read graphics data; and the like. The second MMU stores the second mapping relationship, and the second mapping relationship is a mapping relationship between the VPP address space and the PP address space. The second mapping relationship herein may be configured in the second MMU by the virtualization software agent when the VPP address space is constructed. An implementation may be as follows: The virtualization software agent sends configuration information to the second MMU, where the configuration information includes the second mapping relationship.

Based on this, sending the VPP address space and the second mapping relationship to the hardware virtualization hypervisor may include: sending the VPP address space to the snoop filter and sending the second mapping relationship to the second MMU. In this way, if the snoop filter stores the VPP address space, each time one piece of graphics data is read when the GPU samples graphics data, the one piece of graphics data corresponds to one VP address and one PP address. Similarly, the one piece of graphics data also corresponds to one VPP address. If a plurality of mapping tables are maintained in the MMU of the GPU when the GPU needs to read graphics data, the memory used for sampling by the GPU stores graphics data in the native format, and the MMU of the GPU stores a real physical address, the GPU sends the real physical address to the memory. The real physical address snooped in the snoop filter of the hardware virtualization hypervisor is not in the VPP address space, and the hardware virtualization hypervisor may discard the received real physical address. In other words, the snoop filter filters out the physical address that is not in the VPP address space.

504: The hardware virtualization hypervisor parses an access command of the GPU to obtain an intermediate virtual address carried in the access command.

Herein, specifically, the snoop filter in the hardware virtualization hypervisor parses the access command of the GPU.

505: The hardware virtualization hypervisor determines whether the intermediate virtual address is in the VPP address space.

As mentioned above, when the GPU samples graphics data in the native format, the intermediate virtual address carried in the access command of the GPU is a real PP address when the data is sampled, and the snoop filter snoops that the PP address is not in the VPP address range. If the GPU samples graphics data in the non-native format, the snoop filter snoops that the intermediate virtual address carried in the access command of the GPU is in the virtual VPP address space in this application.

506: If the intermediate virtual address is in the VPP address space, the hardware virtualization hypervisor determines that the intermediate virtual address is a first VPP address in the VPP space.

In other words, the snoop filter determines that the intermediate virtual address is one VPP address in the VPP space.

507: The hardware virtualization hypervisor performs format mapping on the first VPP address to obtain a target VPP address in the native format.

Specifically, the snoop filter sends the first VPP address to the format conversion processor, so that the format conversion processor converts the first VPP address into the target VPP address. Herein, the first VPP address needs to be converted into the target VPP address because there are a plurality of cases of pixel formats stored in the memory. For example, the pixel format is a compressed format or an encrypted format. In other words, the target VPP address is a VPP address corresponding to a pixel format in the memory after address conversion.

Therefore, converting the first VPP address into the target VPP address by the format conversion processor is applicable to a plurality of scenarios. The following three cases are described by using examples in this embodiment of this application.
(1) The format conversion processor obtains, based on the first VPP address, pixel coordinates (x, y) corresponding to the first VPP address, and then obtains, based on the pixel coordinates (x, y), the target VPP address corresponding to the pixel coordinates (x, y).

An example of obtaining the target VPP address corresponding to the pixel coordinates (x, y) based on the pixel coordinates (x, y) may be as follows:
const uint TileW; //32
const uint TileH; //32
const uint WidthInTile = (ImageWidth + TileW - 1)/TileW;
//Tiling Address Transform
uint TileX = x /TileW;
uint TileY = y /TileH;
uint TileOffsetX = x % TileW;
uint TileOffsetY = y % TileH;
PixelAddress = (TileY x WidthInTile + TileX) x (TileW x TileH) + TileOffsetY x TileW + TileX

When sampling and rendering are performed at a granularity of a tile, TileW and TileH represent a width and a height of a tile tile bound to the first VPP address in the non-native format, and WidthInTile represents a tile sequence. In this way, coordinates (TileX, TileY) of the tile and offset coordinates (TileOffsetX, TileOffsetY) of the tile may be calculated based on the pixel coordinates (x, y) of the first VPP address in the non-native format and the width and height of the tile. Finally, the target VPP address PixelAddress in the native format is calculated based on the width and height (TileW and TileH) of the tile, the coordinates (TileX, TileY) of the tile, and the offset coordinates (TileOffsetX, TileOffsetY) of the tile.

In this case, after graphics data is read based on a finally obtained physical address in the non-native format, when the graphics data needs to be transmitted back to the GPU, the data may be directly fed back from the memory to the GPU.

(2) When a format of graphics data stored in the memory is the compressed format, for random access at any location in the memory, these compressed formats are generally block-based, to be specific, each frame of graphic is divided into different graphics blocks, and these graphics blocks may be in a lossless format or a lossless format. In this embodiment of this application, lossless compression based on a graphics block is used as an example for description.

Based on this, to enable the format conversion processor to convert the first VPP address into the target VPP address, the format conversion processor may first obtain, based on the first VPP address, pixel coordinates (x, y) corresponding to the first VPP address; obtain, based on the pixel coordinates (x, y), an index of a graphics block to be obtained from the first VPP address; obtain, based on the index, header data of a graphics block that is prestored by the format conversion processor and that corresponds to the index; read compression offset information of the header data stored in the header data; and then obtain the target VPP address corresponding to the graphics block based on the compression offset information of the header data. The compression offset information of the header data may be understood as an address of the header data.

(3) Some texture samplers in the GPU are protected by digital rights management. Therefore, common graphics data and an additional signature are encoded into the memory. To be specific, the graphics data stored in the memory is encrypted data, and a plurality of layers of authentication are required to obtain the data when the graphics data is sampled. In this case, to enable the format conversion processor to convert the first VPP address into the target VPP address, the format conversion processor may first be controlled to obtain, based on the first VPP address, pixel coordinates (x, y) corresponding to the first VPP address; decode a signature, to be specific, obtain a signature of a pixel corresponding to the pixel coordinates (x, y) based on the pixel coordinates (x, y); and then obtain, based on the signature of the pixel, the target VPP address that is prestored in the format conversion processor and that corresponds to the signature.

In this case, after graphics data is read based on the physical address in the non-native format, when the graphics data needs to be transmitted back to the GPU, because the graphics data stored in the memory is encrypted data, the method further includes: The format conversion processor decrypts the read graphics data and sends the decrypted graphics data to the GPU.

508: The hardware virtualization hypervisor obtains a target PP address (a first physical address) based on the target VPP address and the second mapping relationship, so that the GPU reads graphics data from the target PP address.

After obtaining the target VPP address, the format conversion processor may transmit the target VPP address to the second MMU. Because the second MMU stores the second mapping relationship, the second MMU may search, based on the second mapping relationship, for a PP address in the non-native format corresponding to the target VPP address, and then send the found PP address in the non-native format to the memory, to read, from the memory, graphics data in the non-native format corresponding to the PP address in the non-native format.

Therefore, in this embodiment of this application, the MMU in the GPU stores a correspondence between a virtual physical address range such as the VPP address range and a VP address range. Because an address arrangement manner may reflect an arrangement manner of sampling graphics data, an arrangement manner of second virtual addresses in this application is an arrangement manner of physical addresses corresponding to the graphics data in the GPU native format. Therefore, when physical addresses in the non-native format are obtained based on second virtual addresses when data is really sampled, a sequence of sampling the graphics data based on the physical addresses in the non-native format is a sequence of sampling graphics data in the converted native format for the GPU. Therefore, in this application, in this virtualization manner, no additional format conversion buffer space is required in the sampling process of the GPU, and an actual format conversion process is omitted. In this way, the GPU samples graphics data in the non-native format at low costs.

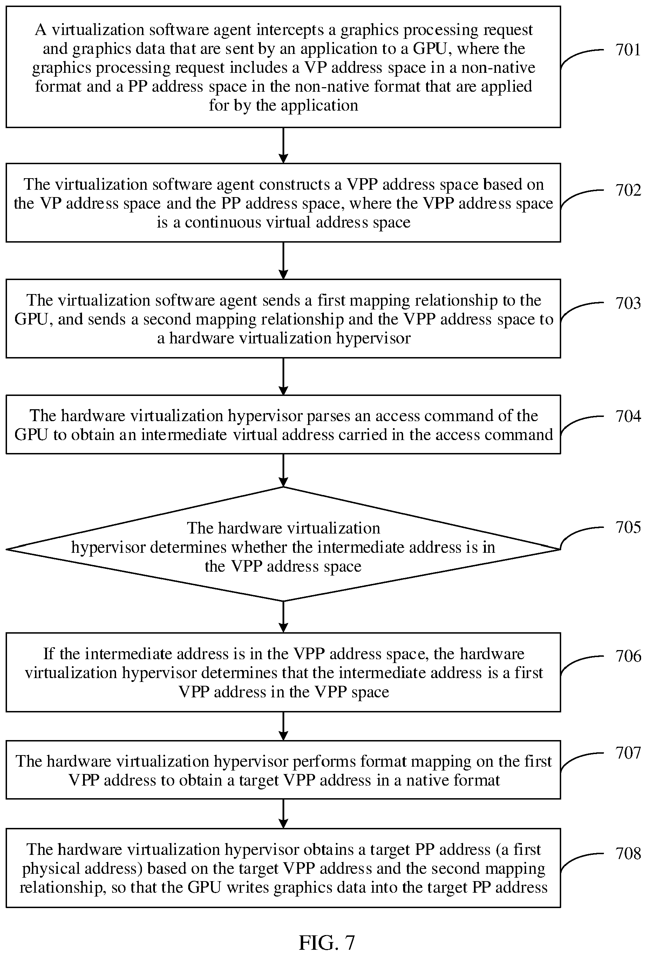

Similar to the sampling process, this application further provides a graphics processing method. A process of enabling the GPU to render graphics data in a native format into a non-native format buffer is used as an example. As shown in FIG. 7, the method includes the following steps.

701: A virtualization software agent intercepts a graphics processing request and graphics data that are sent by an application to a GPU, where the graphics processing request includes a VP address space in a non-native format and a PP address space in the non-native format that are applied for by the application.

An implementation of step 701 is similar to an implementation of step 501. A difference lies in that when intercepting the graphics processing request, the virtualization software agent further intercepts the graphics data to be written into a memory. The graphics data is graphics data in a GPU native format. In this embodiment of this application, the graphics data in the GPU native format is written into the memory in the non-native format.

It may be understood that the graphics data may alternatively be directly sent by the application to the GPU without being intercepted by the virtualization software agent.

702: The virtualization software agent constructs a VPP address space based on the VP address space and the PP address space, where the VPP address space is a consecutive virtual address space.

An implementation of step 702 is similar to an implementation of step 502. A difference lies in that the VPP address space is used to enable the GPU to render the graphics data in the native format in a sequence of addresses in the native format. Similarly, because address sequences are different, formats of graphics data obtained through rendering based on the address sequences are different. In this way, although the graphics data stored in the memory is graphics data in the non-native format, and the application applies for the VP address space in the non-native format and the PP address space in the non-native format, when the GPU needs to render the graphics data in the native format into the memory in the non-native format, the GPU may first obtain the graphics data in the native format in a sequence of addresses in the native format such as VPP addresses in this application, so that the VPP addresses are subsequently demapped to PP addresses in the non-native format. When the graphics data in the native format is stored in the memory, the graphics data in the native format may be written into the memory based on the PP address in the non-native format, so that finally the graphics data in the memory is graphics data in the non-native format.

703: The virtualization software agent sends a first mapping relationship to the GPU, and sends a second mapping relationship and the VPP address space to a hardware virtualization hypervisor.

An implementation of step 703 is similar to an implementation of step 503. A difference lies in that if the virtualization software agent further intercepts the graphics data, the virtualization software agent further needs to send the graphics data to the GPU, so that the GPU writes the intercepted graphics data into the memory by using the hardware virtualization hypervisor. A snoop filter in the hardware virtualization hypervisor is configured to determine whether a physical address of the graphics data rendered by the GPU is in a VPP address range. A format conversion processor is configured to: convert a first VPP address sent when the GPU renders the graphics data into a target VPP address; compress or encrypt to-be-written graphics data, and the like.

704: The hardware virtualization hypervisor parses an access command of the GPU to obtain an intermediate virtual address carried in the access command.

705: The hardware virtualization hypervisor determines whether the intermediate virtual address is in the VPP address space.

For an implementation of step 705, refer to step 505.

706: If the intermediate virtual address is in the VPP address space, the hardware virtualization hypervisor determines that the intermediate virtual address is a first VPP address in the VPP space.

707: The hardware virtualization hypervisor performs format mapping on the first VPP address to obtain the target VPP address in the native format.

Specifically, the snoop filter sends the first VPP address and the graphics data received from the GPU to the format conversion processor, to control the format conversion processor to convert the first VPP address into the target VPP address. Similar to step 507, the format conversion processor performs address conversion because formats of pixels in the memory are different.

Similarly, in a rendering process of the GPU, controlling the format conversion processor to convert the first VPP address into the target VPP address may also be applicable to a plurality of scenarios.

For a scenario, refer to the descriptions in the case (1) in step 508.

Another scenario is similar to the case (2) in step 508. A difference lies in that, in an address translation process, to-be-rendered graphics data further needs to be compressed. Specifically, if the format of the pixel stored in the memory is a compressed format, and the GPU needs to write the graphics data into the memory, when the format conversion processor needs to convert the first VPP address into the target VPP address, the format conversion processor may be first controlled to obtain, based on the first VPP address, pixel coordinates (x, y) corresponding to the first VPP address; calculate, based on the pixel coordinates (x, y), an index of a graphics block corresponding to the graphics data; obtain header data of the graphics block based on the index; compress the header data and the graphics data; and store a correspondence between the compressed header data and the index in the format converter, so that the correspondence is used in a subsequent sampling process. Then, the target VPP address corresponding to the graphic block is obtained through calculation based on an address of the header data.

Still another scenario is similar to the case (3) in step 508. A difference lies in that when the first VPP address is converted into the target VPP address, if the format of the pixel stored in the memory is an encrypted format, the format conversion processor further needs to encrypt to-be-written graphics data. A specific encryption mode may be implemented by using a simple stream cipher or encrypted by using a private cipher of a complex block cipher. This is not limited in this application.

708: The hardware virtualization hypervisor obtains a target PP address (a first physical address) based on the target VPP address and the second mapping relationship, so that the GPU writes the graphics data into the target PP address.

After obtaining the target VPP address, the format conversion processor sends the target VPP address and the compressed or encrypted graphics data to a second MMU. The second MMU searches, based on the stored second mapping relationship, for a PP address in the non-native format corresponding to the target VPP address, and then sends graphics data to the memory based on the found PP address, to write the graphics data into the memory based on the PP address in the non-native format.

Therefore, in this embodiment of this application, the MMU in the GPU stores a virtual physical address such as a VPP address, namely, a second virtual address space. Because an address arrangement manner may reflect an arrangement manner of rendering graphics data, an arrangement manner of virtual physical addresses in this application is an arrangement manner of physical addresses corresponding to graphics data in the GPU native format. Therefore, when corresponding physical addresses in the non-native format are obtained based on virtual physical addresses when data is really rendered, a sequence of rendering the graphics data based on the physical addresses in the non-native format is a sequence of rendering the graphics data in the native format for the GPU. Therefore, in this application, in this virtualization manner, no additional format conversion buffer space is required in the rendering process of the GPU, and an actual format conversion process is omitted. In this way, the GPU renders the graphics data in the native format to the memory in the non-native format at low costs.

The foregoing mainly describes, from the perspective of the terminal device, the solutions provided in the embodiments of this application. It may be understood that to implement the foregoing functions, the terminal device includes corresponding hardware structures and/or software modules for performing the functions. A person skilled in the art should easily be aware that, in combination with units and algorithm steps of the examples described in the embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In this embodiment of this application, the terminal device may be divided into functional modules based on the foregoing method examples. For example, functional modules corresponding to functions may be obtained through division, or two or more functions may be integrated into one processing module. The integrated module may be implemented in a form of hardware, or may be implemented in a form of a software functional module. It should be noted that, in the embodiments of this application, division into the modules is an example, and is merely logical function division. In actual implementation, another division manner may be used.

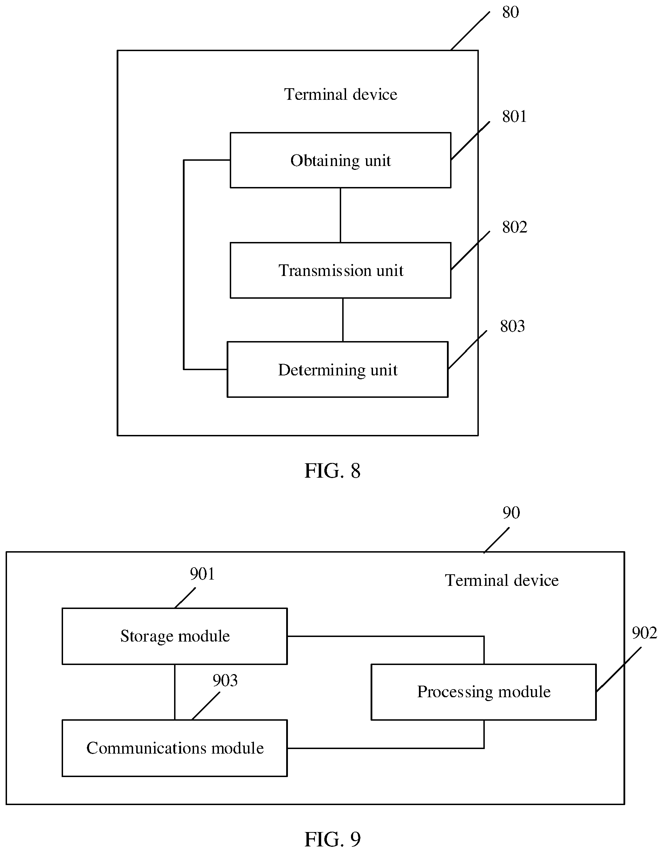

When each functional module is obtained through division corresponding to each function, FIG. 8 is a possible schematic diagram of a structure of the terminal device in the foregoing embodiments. The terminal device may include a graphics processing apparatus. The graphics processing apparatus may be configured to perform the method steps corresponding to FIG. 5 and the method steps corresponding to FIG. 7. A terminal device 80 includes an obtaining unit 801, a transmission unit 802, and a determining unit 803. The obtaining unit 801 is configured to support the terminal device to perform the processes 501, 502, 504, 507, and 508 in FIG. 5, and the processes 701, 702, 704, 707, and 708 in FIG. 7. The transmission unit 802 is configured to perform the process 503 in FIG. 5 and the process 703 in FIG. 7. The determining unit 803 is configured to support the terminal device 80 to perform the processes 505 and 506 in FIG. 5 and processes 705 and 706 in FIG. 7. All related content of the steps in the foregoing method embodiments may be cited in function descriptions of corresponding functional modules. Details are not described herein again.

When an integrated unit is used, FIG. 9 is a possible schematic diagram of a structure of the terminal device in the foregoing embodiments. A terminal device 90 includes a processing module 902 and a communications module 903. The processing module 902 is configured to control and manage an action of the terminal device. For example, the processing module 902 is configured to support the terminal device to perform the processes 501 to 508 in FIG. 5, the processes 701 to 708 in FIG. 7, and/or another process used for the technology described in this specification. The communications module 903 is configured to support communication between the terminal device and another network entity. The terminal device may further include a storage module 901, configured to store program code and data of the terminal device. The program code and the data include program code and data of a virtualization software agent and a hardware virtualization hypervisor in this application.

The processing module 902 may be a processor or a controller, for example, a central processing unit (Central Processing Unit, CPU), a general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or a combination thereof. The processor may implement or execute various example logical blocks, modules, and circuits described with reference to content disclosed in this application. The processor may be a combination of processors implementing a computing function, for example, a combination of one or more microprocessors, or a combination of the DSP and a microprocessor. The communications module 903 may be a transceiver, a transceiver circuit, a communications interface, or the like. The storage module 901 may be a memory. The memory includes the program code and the data of the virtualization software agent and the hardware virtualization hypervisor in this application. The processor includes a hardware structure of the hardware virtualization hypervisor in this application.

When the processing module 902 is a processor, the communications module 903 is a transceiver, and the storage module 901 is a memory, the terminal device used in this embodiment of this application may be the terminal device shown in FIG. 3.

The foregoing descriptions are merely specific implementations of the present invention, but are not intended to limit the protection scope of the present invention. Any variation or replacement within the technical scope disclosed in the present invention shall fall within the protection scope of the present invention. Therefore, the protection scope of the present invention shall be subject to the protection scope of the claims.

## Claims

1. A graphics processing method, comprising:
obtaining a first virtual address to be accessed by a graphics processing unit (103), GPU, wherein the first virtual address belongs to a first virtual address space (VP); and
obtaining a second virtual address based on the first virtual address, wherein the second virtual address belongs to a second virtual address space (VPP);
the second virtual address space is different from the first virtual address space, the second virtual address space and the first virtual address space are mapped to a same first physical address space (PP), a physical address to which the first virtual address is mapped corresponds to image data in a first format, the image data in the first format being image data in a non-native format that cannot be accessed by the GPU, and a physical address to which the second virtual address is mapped corresponds to image data in a second format, the image data in the second format being image data in a native format that can be directly accessed by the GPU;
wherein the obtaining a second virtual address based on the first virtual address specifically comprises:
translating the first virtual address into an intermediate virtual address, wherein the intermediate virtual address is a virtual address in the second virtual address space; and
mapping the intermediate virtual address to the second virtual address in the second virtual address space;
wherein the obtaining a second virtual address based on the first virtual address comprises:
translating the first virtual address into an intermediate virtual address;
determining whether the intermediate virtual address belongs to the second virtual address space; and
when the intermediate virtual address belongs to the second virtual address space, mapping the intermediate virtual address to the second virtual address in the second virtual address space; and
wherein the mapping the intermediate virtual address to the second virtual address in the second virtual address space specifically comprises:
obtaining pixel coordinates corresponding to the intermediate virtual address; and
obtaining the second virtual address based on the pixel coordinates.

2. The method according to claim 1, wherein
the image data in the first format is compressed data that needs to be read by the GPU, the compressed data comprises a plurality of compressed graphics blocks; and the mapping the intermediate virtual address to the second virtual address in the second virtual address space comprises:
obtaining pixel coordinates corresponding to the intermediate virtual address;
obtaining, based on the pixel coordinates, compression offset information of a target compressed graphics block corresponding to the intermediate virtual address; and
obtaining the second virtual address through calculation based on the compression offset information; and
the method further comprises:
decompressing the read target compressed graphics block.

3. The method according to claim 1, wherein the image data in the first format is compressed data to be written by the GPU, the mapping the intermediate virtual address to the second virtual address in the second virtual address space comprises:
obtaining pixel coordinates corresponding to the intermediate virtual address;
obtaining an address of header data of the to-be-written compressed data based on the pixel coordinates; and
obtaining the second virtual address based on the address of the header data.

4. The method according to claim 1, wherein the mapping the intermediate virtual address to the second virtual address in the second virtual address space comprises:
obtaining pixel coordinates corresponding to the intermediate virtual address;
obtaining a signature of a pixel corresponding to the pixel coordinates; and
obtaining, based on the signature, the second virtual address corresponding to the signature; and
if the image data in the first format is encrypted data that needs to be read by the GPU, the method further comprises:
decrypting the read image data and sending the decrypted image data to the GPU.

5. A graphics processing apparatus, wherein the apparatus comprises a graphics processing unit (103), GPU, and a hardware virtualization hypervisor;
the GPU is configured to obtain a to-be-accessed first virtual address, wherein the first virtual address belongs to a first virtual address space (VP);
the hardware virtualization hypervisor is configured to obtain a second virtual address based on the first virtual address, wherein the second virtual address belongs to a second virtual address space (VPP);
the second virtual address space is different from the first virtual address space, the second virtual address space and the first virtual address space are mapped to a same first physical address space, a physical address to which the first virtual address is mapped corresponds to image data in a first format, the image data in the first format being image data in a non-native format that cannot be accessed by the GPU, and a physical address to which the second virtual address is mapped corresponds to image data in a second format, the image data in the second format being image data in a native format that can be directly accessed by the GPU; and
wherein the GPU comprises a first memory management unit, MMU, and the hardware virtualization hypervisor comprises a format conversion processor (102, 104);
the first MMU is configured to translate the first virtual address into an intermediate virtual address, wherein the intermediate virtual address is a virtual address in the second virtual address space; and
the format conversion processor (102, 104) is configured to map the intermediate virtual address to the second virtual address in the second virtual address space.

6. The apparatus according to claim 5, wherein the hardware virtualization hypervisor comprises a second MMU, and the second MMU is configured to:
obtain, based on a second mapping relationship, a first physical address corresponding to the second virtual address in the first physical address space, wherein the second mapping relationship is a mapping relationship between the second virtual address space and the first physical address space.

7. The apparatus according to claim 6, wherein the apparatus further comprises a central processing unit, CPU, a virtualization software agent runs on the CPU, and the virtualization software agent is configured to:
obtain a graphics processing request sent to the GPU, wherein the graphics processing request comprises the first virtual address space and the first physical address space; and
construct the second virtual address space based on the first virtual address space and the first physical address space.

8. The apparatus according to claim 7, wherein the virtualization software agent is specifically configured to:
obtain a size of a physical page, PP, corresponding to the first physical address space and a size of a virtual page, VP, corresponding to the first virtual address space; and
map the first physical address space to a consecutive virtual memory space to obtain the second virtual address space, wherein a size of a virtual physical page, VPP, corresponding to the second virtual address space is greater than the size of the PP and the size of the VP.

9. The apparatus according to claim 5, wherein the GPU comprises a first MMU, and the hardware virtualization hypervisor comprises a snoop filter and a format conversion processor (102, 104);
the first MMU is configured to translate the first virtual address into an intermediate virtual address;
the snoop filter is configured to:
determine whether the intermediate virtual address belongs to the second virtual address space; and
when the intermediate virtual address belongs to the second virtual address space, send the intermediate virtual address to the format conversion processor; and
the format conversion processor is configured to map the intermediate virtual address to the second virtual address in the second virtual address space.

10. The apparatus according to any one of claims 5 to 9, wherein the format conversion processor is specifically configured to:
obtain pixel coordinates corresponding to the intermediate virtual address; and
obtain the second virtual address based on the pixel coordinates.

11. The apparatus according to any one of claims 5 to 9, wherein the image data in the first format is compressed data that needs to be read by the GPU, the compressed data comprises a plurality of compressed graphics blocks;
the format conversion processor is specifically configured to:
obtain pixel coordinates corresponding to the intermediate virtual address;
obtain, based on the pixel coordinates, compression offset information of a target compressed graphics block corresponding to the intermediate virtual address; and
obtain the second virtual address through calculation based on the compression offset information; and
the format conversion processor is further configured to:
decompress the read target compressed graphics block; or,
wherein the image data in the first format is compressed data to be written by the GPU, the format conversion processor is configured to:
obtain pixel coordinates corresponding to the intermediate virtual address;
obtain an address of header data of the to-be-written compressed data based on the pixel coordinates; and
obtain the second virtual address based on the address of the header data.

12. The apparatus according to any one of claims 5 to 9, wherein the format conversion processor is configured to:
obtain pixel coordinates corresponding to the intermediate virtual address;
obtain a signature of a pixel corresponding to the pixel coordinates; and
obtain, based on the signature, the second virtual address corresponding to the signature; and
if the image data in the first format is encrypted data that needs to be read by the GPU, the format conversion processor is further configured to:
decrypt the read image data and send the decrypted image data to the GPU.

## Patentansprüche

1. Grafikverarbeitungsverfahren, das Folgendes umfasst:
Erhalten einer ersten virtuellen Adresse, auf die von einer Grafikverarbeitungseinheit (103) (GPU) zugegriffen werden kann,
wobei die erste virtuelle Adresse zu einem ersten virtuellen Adressraum (VP) gehört; und
Erhalten einer zweiten virtuellen Adresse auf der Grundlage der ersten virtuellen Adresse,
wobei die zweite virtuelle Adresse zu einem zweiten virtuellen Adressraum (VPP) gehört;
wobei der zweite virtuelle Adressraum sich von dem ersten virtuellen Adressraum unterscheidet, der zweite virtuelle Adressraum und der erste virtuelle Adressraum auf denselben ersten physischen Adressraum (PP) abgebildet werden, eine physische Adresse, auf die die erste virtuelle Adresse abgebildet wird, Bilddaten in einem ersten Format entspricht, wobei die Bilddaten im ersten Format Bilddaten in einem nicht-nativen Format sind, auf die die GPU nicht zugreifen kann, und eine physische Adresse, auf die die zweite virtuelle Adresse abgebildet wird, Bilddaten in einem zweiten Format entspricht, wobei die Bilddaten im zweiten Format Bilddaten in einem nativen Format sind, auf die die GPU direkt zugreifen kann;
wobei die Gewinnung einer zweiten virtuellen Adresse auf der Grundlage der ersten virtuellen Adresse insbesondere Folgendes umfasst:
Übersetzen der ersten virtuellen Adresse in eine virtuelle Zwischenadresse,
wobei die virtuelle Zwischenadresse eine virtuelle Adresse in dem zweiten virtuellen Adressraum ist; und
Abbilden der virtuellen Zwischenadresse auf die zweite virtuelle Adresse im zweiten virtuellen Adressraum;
wobei die Gewinnung einer zweiten virtuellen Adresse auf der Grundlage der ersten virtuellen Adresse Folgendes umfasst:
Übersetzen der ersten virtuellen Adresse in eine virtuelle Zwischenadresse;
Bestimmen, ob die virtuelle Zwischenadresse zum zweiten virtuellen Adressraum gehört; und
wenn die virtuelle Zwischenadresse zu dem zweiten virtuellen Adressraum gehört, Abbilden der virtuellen Zwischenadresse auf die zweite virtuelle Adresse in dem zweiten virtuellen Adressraum; und
wobei das Abbilden der virtuellen Zwischenadresse auf die zweite virtuelle Adresse in dem zweiten virtuellen Adressraum insbesondere Folgendes umfasst:
Erhalten von Pixelkoordinaten, die der virtuellen Zwischenadresse entsprechen; und
Erhalten der zweiten virtuellen Adresse auf der Grundlage der Pixelkoordinaten.

2. Verfahren nach Anspruch 1, wobei es sich bei den Bilddaten im ersten Format um komprimierte Daten handelt, die von der GPU gelesen werden müssen, wobei die komprimierten Daten eine Vielzahl von komprimierten Grafikblöcken umfassen; und das Abbilden der virtuellen Zwischenadresse auf die zweite virtuelle Adresse in dem zweiten virtuellen Adressraum Folgendes umfasst:
Erhalten von Pixelkoordinaten, die der virtuellen Zwischenadresse entsprechen;
Erhalten, basierend auf den Pixelkoordinaten, von Kompressionsversatzinformationen eines komprimierten Zielgrafikblocks, der der virtuellen Zwischenadresse entspricht; und
Erhalten der zweiten virtuellen Adresse durch Berechnung auf der Grundlage der Kompressionsversatzinformationen; und wobei das Verfahren ferner Folgendes umfasst:
Dekomprimieren des komprimierten Grafikblocks des Leseziels.

3. Verfahren nach Anspruch 1, wobei es sich bei den Bilddaten im ersten Format um komprimierte Daten handelt, die von der GPU geschrieben werden sollen, wobei das Abbilden der virtuellen Zwischenadresse auf die zweite virtuelle Adresse im zweiten virtuellen Adressraum Folgendes umfasst:
Erhalten von Pixelkoordinaten, die der virtuellen Zwischenadresse entsprechen;
Erhalten einer Adresse von Kopfdaten der zu schreibenden komprimierten Daten basierend auf den Pixelkoordinaten; und
Erhalten der zweiten virtuellen Adresse auf der Grundlage der Adresse der Kopfdaten.

4. Verfahren nach Anspruch 1, wobei das Abbilden der virtuellen Zwischenadresse auf die zweite virtuelle Adresse in dem zweiten virtuellen Adressraum Folgendes umfasst:
Erhalten von Pixelkoordinaten, die der virtuellen Zwischenadresse entsprechen;
Erhalten einer Signatur eines Pixels entsprechend den Pixelkoordinaten; und
Erhalten der zweiten virtuellen Adresse, die der Signatur entspricht, basierend auf der Signatur; und
wenn es sich bei den Bilddaten im ersten Format um verschlüsselte Daten handelt, die von der GPU gelesen werden müssen, umfasst das Verfahren ferner Folgendes:
Entschlüsseln der gelesenen Bilddaten und Senden der entschlüsselten Bilddaten an die GPU.

5. Grafikverarbeitungsvorrichtung, wobei die Vorrichtung eine Grafikverarbeitungseinheit (103) (GPU) und einen Hardware-Virtualisierungs-Hypervisor umfasst;
wobei die GPU so konfiguriert ist, dass sie eine erste virtuelle Adresse erhält, auf die zugegriffen werden soll,
wobei die erste virtuelle Adresse zu einem ersten virtuellen Adressraum (VP) gehört; wobei der Hardware-Virtualisierungs-Hypervisor so konfiguriert ist, dass er eine zweite virtuelle Adresse auf der Grundlage der ersten virtuellen Adresse erhält,
wobei die zweite virtuelle Adresse zu einem zweiten virtuellen Adressraum (VPP) gehört;
wobei der zweite virtuelle Adressraum sich von dem ersten virtuellen Adressraum unterscheidet, der zweite virtuelle Adressraum und der erste virtuelle Adressraum auf denselben ersten physischen Adressraum abgebildet werden, eine physische Adresse, auf die die erste virtuelle Adresse abgebildet wird, Bilddaten in einem ersten Format entspricht, wobei die Bilddaten in dem ersten Format Bilddaten in einem nicht-nativen Format sind, auf die von der GPU nicht zugegriffen werden kann, und eine physische Adresse, auf die die zweite virtuelle Adresse abgebildet wird, Bilddaten in einem zweiten Format entspricht, wobei die Bilddaten in dem zweiten Format Bilddaten in einem nativen Format sind, auf die von der GPU direkt zugegriffen werden kann; und
wobei die GPU eine erste Speicherverwaltungseinheit (MMU) umfasst und der Hardware-Virtualisierungs-Hypervisor einen Formatkonvertierungsprozessor (102, 104) umfasst;
wobei die erste MMU so konfiguriert ist, dass sie die erste virtuelle Adresse in eine virtuelle Zwischenadresse übersetzt, wobei die virtuelle Zwischenadresse eine virtuelle Adresse in dem zweiten virtuellen Adressraum ist; und
wobei der Formatkonvertierungsprozessor (102, 104) so konfiguriert ist, dass er die virtuelle Zwischenadresse auf die zweite virtuelle Adresse in dem zweiten virtuellen Adressraum abbildet.

6. Vorrichtung nach Anspruch 5, wobei der Hardware-Virtualisierungs-Hypervisor eine zweite MMU umfasst, und die zweite MMU für Folgendes konfiguriert ist:
Erhalten, auf der Grundlage einer zweiten Zuordnungsbeziehung, einer ersten physischen Adresse, die der zweiten virtuellen Adresse im ersten physischen Adressraum entspricht,
wobei die zweite Zuordnungsbeziehung eine Zuordnungsbeziehung zwischen dem zweiten virtuellen Adressraum und dem ersten physischen Adressraum ist.

7. Vorrichtung nach Anspruch 6, wobei die Vorrichtung ferner eine zentrale Verarbeitungseinheit (CPU) umfasst, ein Virtualisierungssoftware-Agent auf der CPU läuft und der Virtualisierungssoftware-Agent für Folgendes konfiguriert ist:
Erhalten einer Grafikverarbeitungsanforderung, die an die GPU gesendet wird, wobei die Grafikverarbeitungsanforderung den ersten virtuellen Adressraum und den ersten physischen Adressraum umfasst; und
Aufbauen des zweiten virtuellen Adressraums auf der Grundlage des ersten virtuellen Adressraums und des ersten physischen Adressraums.

8. Vorrichtung nach Anspruch 7, wobei der Virtualisierungssoftware-Agent speziell für Folgendes konfiguriert ist:
Erhalten einer Größe einer physischen Seite (PP), die dem ersten physischen Adressraum entspricht, und einer Größe einer virtuellen Seite (VP), die dem ersten virtuellen Adressraum entspricht; und
Abbilden des ersten physischen Adressraums auf einen nachfolgenden virtuellen Speicherraum, um den zweiten virtuellen Adressraum zu erhalten,
wobei eine Größe einer virtuellen physischen Seite (VPP), die dem zweiten virtuellen Adressraum entspricht, größer ist als die Größe der PP und die Größe der VP.

9. Vorrichtung nach Anspruch 5, wobei die GPU eine erste MMU umfasst und der Hardware-Virtualisierungs-Hypervisor einen Snoop-Filter und einen Formatkonvertierungsprozessor (102, 104) umfasst;
wobei die erste MMU so konfiguriert ist, dass sie die erste virtuelle Adresse in eine virtuelle Zwischenadresse übersetzt;
wobei der Snoop-Filter für Folgendes konfiguriert ist:
Bestimmen, ob die virtuelle Zwischenadresse zu dem zweiten virtuellen Adressraum gehört; und
wenn die virtuelle Zwischenadresse zu dem zweiten virtuellen Adressraum gehört, Senden der virtuellen Zwischenadresse an den Formatkonvertierungsprozessor; und
wobei der Formatkonvertierungsprozessor so konfiguriert ist, dass er die virtuelle Zwischenadresse auf die zweite virtuelle Adresse in dem zweiten virtuellen Adressraum abbildet.

10. Vorrichtung nach einem der Ansprüche 5 bis 9, wobei der Formatkonvertierungsprozessor speziell für Folgendes konfiguriert ist:
Erhalten von Pixelkoordinaten, die der virtuellen Zwischenadresse entsprechen; und
Erhalten der zweiten virtuellen Adresse auf der Grundlage der Pixelkoordinaten.

11. Vorrichtung nach einem der Ansprüche 5 bis 9, wobei die Bilddaten im ersten Format komprimierte Daten sind, die von der GPU gelesen werden müssen, wobei die komprimierten Daten eine Vielzahl von komprimierten Grafikblöcken umfassen; wobei der Formatkonvertierungsprozessor speziell für Folgendes konfiguriert ist:
Erhalten von Pixelkoordinaten, die der virtuellen Zwischenadresse entsprechen;
Erhalten, auf der Grundlage der Pixelkoordinaten, von Kompressionsversatzinformationen eines komprimierten Zielgrafikblocks, der der virtuellen Zwischenadresse entspricht; und
Erhalten der zweiten virtuellen Adresse durch Berechnung auf der Grundlage der Kompressionsversatzinformationen; und
wobei der Formatkonvertierungsprozessor ferner für Folgendes konfiguriert ist:
Dekomprimieren des komprimierten Grafikblocks des Leseziels; oder,
wobei die Bilddaten im ersten Format komprimierte Daten sind, die von der GPU geschrieben werden sollen, wobei der Formatkonvertierungsprozessor für Folgendes konfiguriert ist:
Erhalten von Pixelkoordinaten, die der virtuellen Zwischenadresse entsprechen;
Erhalten einer Adresse von Kopfdaten der zu schreibenden komprimierten Daten auf der Grundlage der Pixelkoordinaten; und
Erhalten der zweiten virtuellen Adresse auf der Grundlage der Adresse der Kopfdaten.

12. Vorrichtung nach einem der Ansprüche 5 bis 9, wobei der Formatkonvertierungsprozessor für Folgendes konfiguriert ist:
Erhalten von Pixelkoordinaten, die der virtuellen Zwischenadresse entsprechen;
Erhalten einer Signatur eines Pixels, die den Pixelkoordinaten entspricht; und
Erhalten, auf der Grundlage der Signatur, der zweiten virtuellen Adresse, die der Signatur entspricht; und
wenn die Bilddaten im ersten Format verschlüsselte Daten sind, die von der GPU gelesen werden müssen, ist der Formatkonvertierungsprozessor ferner für Folgendes konfiguriert:
Entschlüsseln der gelesenen Bilddaten und Senden der entschlüsselten Bilddaten an die GPU.

## Revendications

1. Procédé de traitement graphique, comprenant :
l'obtention d'une première adresse virtuelle à laquelle une unité de traitement graphique, GPU, (103) doit accéder, la première adresse virtuelle appartenant à un premier espace d'adresse virtuel (VP) ; et
l'obtention d'une deuxième adresse virtuelle à partir de la première adresse virtuelle, la deuxième adresse virtuelle appartenant à un deuxième espace d'adresse virtuel (VPP) ;
le deuxième espace d'adresse virtuel étant différent du premier espace d'adresse virtuel, le deuxième espace d'adresse virtuel et le premier espace d'adresse virtuel étant mappés sur un même premier espace d'adresse physique (PP), une adresse physique sur laquelle est mappée la première adresse virtuelle correspondant à des données d'image dans un premier format, les données d'image au premier format étant des données d'image dans un format non natif auquel la GPU ne peut pas accéder, et une adresse physique sur laquelle est mappée la deuxième adresse virtuelle correspondant à des données d'image dans un deuxième format, les données d'image au deuxième format étant des données d'image dans un format natif auquel la GPU peut accéder directement ;
l'obtention d'une deuxième adresse virtuelle à partir de la première adresse virtuelle comprenant spécifiquement :
la traduction de la première adresse virtuelle en une adresse virtuelle intermédiaire, l'adresse virtuelle intermédiaire étant une adresse virtuelle dans le deuxième espace d'adresse virtuel ; et
le mappage de l'adresse virtuelle intermédiaire sur la deuxième adresse virtuelle dans le deuxième espace d'adresse virtuel ;
l'obtention d'une deuxième adresse virtuelle à partir de la première adresse virtuelle comprenant :
la traduction de la première adresse virtuelle en une adresse virtuelle intermédiaire ;
la détermination du fait que l'adresse virtuelle intermédiaire appartient ou non au deuxième espace d'adresse virtuel ; et
lorsque l'adresse virtuelle intermédiaire appartient au deuxième espace d'adresse virtuel, le mappage de l'adresse virtuelle intermédiaire sur la deuxième adresse virtuelle dans le deuxième espace d'adresse virtuel ; et
le mappage de l'adresse virtuelle intermédiaire sur la deuxième adresse virtuelle dans le deuxième espace d'adresse virtuel comprenant spécifiquement :
l'obtention de coordonnées de pixel correspondant à l'adresse virtuelle intermédiaire ; et
l'obtention de la deuxième adresse virtuelle à partir des coordonnées de pixel.

2. Procédé selon la revendication 1, dans lequel
les données d'image au premier format sont des données compressées que la GPU doit lire, les données compressées comprenant une pluralité de blocs graphiques compressés ; et le mappage de l'adresse virtuelle intermédiaire sur la deuxième adresse virtuelle dans le deuxième espace d'adresse virtuel comprend :
l'obtention de coordonnées de pixel correspondant à l'adresse virtuelle intermédiaire ;
l'obtention, à partir des coordonnées de pixel, d'informations de décalage de compression d'un bloc graphique compressé cible correspondant à l'adresse virtuelle intermédiaire ; et
l'obtention de la deuxième adresse virtuelle par calcul à partir des informations de décalage de compression ; et
le procédé comprend en outre :
la décompression du bloc graphique compressé cible lu.

3. Procédé selon la revendication 1, dans lequel les données d'image au premier format sont des données compressées que la GPU doit écrire, le mappage de l'adresse virtuelle intermédiaire sur la deuxième adresse virtuelle dans le deuxième espace d'adresse virtuel comprenant :
l'obtention de coordonnées de pixel correspondant à l'adresse virtuelle intermédiaire ;
l'obtention d'une adresse de données d'en-tête des données compressées à écrire à partir des coordonnées de pixel ; et
l'obtention de la deuxième adresse virtuelle à partir de l'adresse des données d'en-tête.

4. Procédé selon la revendication 1, dans lequel le mappage de l'adresse virtuelle intermédiaire sur la deuxième adresse virtuelle dans le deuxième espace d'adresse virtuel comprend :
l'obtention de coordonnées de pixel correspondant à l'adresse virtuelle intermédiaire ;
l'obtention d'une signature d'un pixel correspondant aux coordonnées de pixel ; et
l'obtention, à partir de la signature, de la deuxième adresse virtuelle correspondant à la signature ; et
si les données d'image au premier format sont des données chiffrées que la GPU doit lire, le procédé comprend en outre :
le déchiffrement des données d'image lues et l'envoi des données d'image déchiffrées à la GPU.

5. Appareil de traitement graphique, lequel appareil comprend une unité de traitement graphique, GPU, (103), et un superviseur de virtualisation matériel ;
la GPU étant configurée pour obtenir une première adresse virtuelle à laquelle il convient d'accéder, la première adresse virtuelle appartenant à un premier espace d'adresse virtuel (VP) ;
le superviseur de virtualisation matériel étant configuré pour obtenir une deuxième adresse virtuelle à partir de la première adresse virtuelle, la deuxième adresse virtuelle appartenant à un deuxième espace d'adresse virtuel (VPP) ;
le deuxième espace d'adresse virtuel étant différent du premier espace d'adresse virtuel, le deuxième espace d'adresse virtuel et le premier espace d'adresse virtuel étant mappés sur un même premier espace d'adresse physique, une adresse physique sur laquelle est mappée la première adresse virtuelle correspondant à des données d'image dans un premier format, les données d'image au premier format étant des données d'image dans un format non natif auquel la GPU ne peut pas accéder, et une adresse physique sur laquelle est mappée la deuxième adresse virtuelle correspondant à des données d'image dans un deuxième format, les données d'image au deuxième format étant des données d'image dans un format natif auquel la GPU peut accéder directement ; et
la GPU comprenant une première unité de gestion de mémoire, MMU, et le superviseur de virtualisation matériel comprenant un processeur de conversion de format (102, 104) ;
la première MMU étant configurée pour traduire la première adresse virtuelle en une adresse virtuelle intermédiaire, l'adresse virtuelle intermédiaire étant une adresse virtuelle dans le deuxième espace d'adresse virtuel ; et
le processeur de conversion de format (102, 104) étant configuré pour mapper l'adresse virtuelle intermédiaire sur la deuxième adresse virtuelle dans le deuxième espace d'adresse virtuel.

6. Appareil selon la revendication 5, dans lequel le superviseur de virtualisation matériel comprend une deuxième MMU, et la deuxième MMU est configurée pour :
obtenir, à partir d'une deuxième relation de mappage, une première adresse physique correspondant à la deuxième adresse virtuelle dans le premier espace d'adresse physique, la deuxième relation de mappage étant une relation de mappage entre le deuxième espace d'adresse virtuel et le premier espace d'adresse physique.

7. Appareil selon la revendication 6, lequel appareil comprend en outre une unité centrale de traitement, CPU, un agent logiciel de virtualisation s'exécutant sur la CPU, et l'agent logiciel de virtualisation étant configuré pour :
obtenir une demande de traitement graphique envoyée à la GPU, la demande de traitement graphique comprenant le premier espace d'adresse virtuel et le premier espace d'adresse physique ; et
construire le deuxième espace d'adresse virtuel à partir du premier espace d'adresse virtuel et du premier espace d'adresse physique.

8. Appareil selon la revendication 7, dans lequel l'agent logiciel de virtualisation est spécifiquement configuré pour :
obtenir une taille d'une page physique, PP, correspondant au premier espace d'adresse physique et une taille d'une page virtuelle, VP, correspondant au premier espace d'adresse virtuel ; et
mapper le premier espace d'adresse physique sur un espace mémoire virtuel consécutif pour obtenir le deuxième espace d'adresse virtuel, une taille d'une page physique virtuelle, VPP, qui correspond au deuxième espace d'adresse virtuel étant plus grande que la taille de la PP et la taille de la VP.

9. Appareil selon la revendication 5, dans lequel la GPU comprend une première MMU, et le superviseur de virtualisation matériel comprend un filtre de surveillance et un processeur de conversion de format (102, 104) ;
la première MMU étant configurée pour traduire la première adresse virtuelle en une adresse virtuelle intermédiaire ;
le filtre de surveillance étant configuré pour :
déterminer si l'adresse virtuelle intermédiaire appartient ou non au deuxième espace d'adresse virtuel ; et
lorsque l'adresse virtuelle intermédiaire appartient au deuxième espace d'adresse virtuel, envoyer l'adresse virtuelle intermédiaire au processeur de conversion de format ; et
le processeur de conversion de format étant configuré pour mapper l'adresse virtuelle intermédiaire sur la deuxième adresse virtuelle dans le deuxième espace d'adresse virtuel.

10. Appareil selon l'une quelconque des revendications 5 à 9, dans lequel le processeur de conversion de format est spécifiquement configuré pour :
obtenir des coordonnées de pixel correspondant à l'adresse virtuelle intermédiaire ; et
obtenir la deuxième adresse virtuelle à partir des coordonnées de pixel.

11. Appareil selon l'une quelconque des revendications 5 à 9, dans lequel les données d'image au premier format sont des données compressées que la GPU doit lire, les données compressées comprenant une pluralité de blocs graphiques compressés ;
le processeur de conversion de format étant spécifiquement configuré pour :
obtenir des coordonnées de pixel correspondant à l'adresse virtuelle intermédiaire ;
obtenir, à partir des coordonnées de pixel, des informations de décalage de compression d'un bloc graphique compressé cible correspondant à l'adresse virtuelle intermédiaire ; et
obtenir la deuxième adresse virtuelle par calcul à partir des informations de décalage de compression ; et
le processeur de conversion de format étant en outre configuré pour :
décompresser le bloc graphique compressé cible lu ; ou,
dans lequel les données d'image au premier format sont des données compressées que la GPU doit écrire, le processeur de conversion de format étant configuré pour :
obtenir des coordonnées de pixel correspondant à l'adresse virtuelle intermédiaire ;
obtenir une adresse de données d'en-tête des données compressées à écrire à partir des coordonnées de pixel ; et
obtenir la deuxième adresse virtuelle à partir de l'adresse des données d'en-tête.

12. Appareil selon l'une quelconque des revendications 5 à 9, dans lequel le processeur de conversion de format est configuré pour :
obtenir des coordonnées de pixel correspondant à l'adresse virtuelle intermédiaire ;
obtenir une signature d'un pixel correspondant aux coordonnées de pixel ; et
obtenir, à partir de la signature, la deuxième adresse virtuelle correspondant à la signature ; et si les données d'image au premier format sont des données chiffrées que la GPU doit lire, le processeur de conversion de format est en outre configuré pour :
déchiffrer les données d'image lues et envoyer les données d'image déchiffrées à la GPU.
